# FASCICULE DE BREVET EUROPEEN

(11) **EP 2 735 038 B1**
(45) Date de publication et mention de la délivrance du brevet: **04.08.2021**
(21) Numéro de dépôt: 12733772.3
(22) Date de dépôt: 13.07.2012
(51) Int. Cl.: H01M 50/20, H01M 10/04, H01M 10/42, B60L 15/00, B60L 50/60, B60L 58/19, B60L 58/21, H01M 10/48, H02M 7/483

(54) **BATTERIE AVEC ARCHITECTURE EN BRIQUES COMPRENANT DES CELLULES DISPOSEES EN SERIE OU EN PARALLELE**
BATTERIE MIT EINER BACKSTEINARCHITEKTUR MIT SERIELL ODER PARALLEL ANGEORDNETEN ZELLEN
BATTERY HAVING A BRICK ARCHITECTURE INCLUDING CELLS ARRANGED IN SERIES OR IN PARALLEL

(30) Priorité: 13.07.2011 FR 1156384
(43) Date de publication de la demande: 28.05.2014
(73) Titulaire: Commissariat à l'Énergie Atomique et aux Énergies Alternatives, 75015 Paris (FR)
(72) Inventeur: DESPESSE, Ghislain, F-38340 Voreppe (FR)
(74) Mandataire: Novaimo
(86) Numéro de dépôt international: PCT/EP2012/063761
(87) Numéro de publication internationale: WO 2013/007810

(56) Documents cités:
- WO-A1-2006/100391
- US-A- 4 175 249
- US-A- 6 121 752
- US-A1- 2009 079 412
- US-A1- 2010 072 950
- US-B1- 7 573 234

## Description

L'invention concerne une batterie. Elle concerne particulièrement une batterie comprenant plusieurs étages de plusieurs cellules élémentaires. Elle concerne aussi un procédé de gestion de batterie.

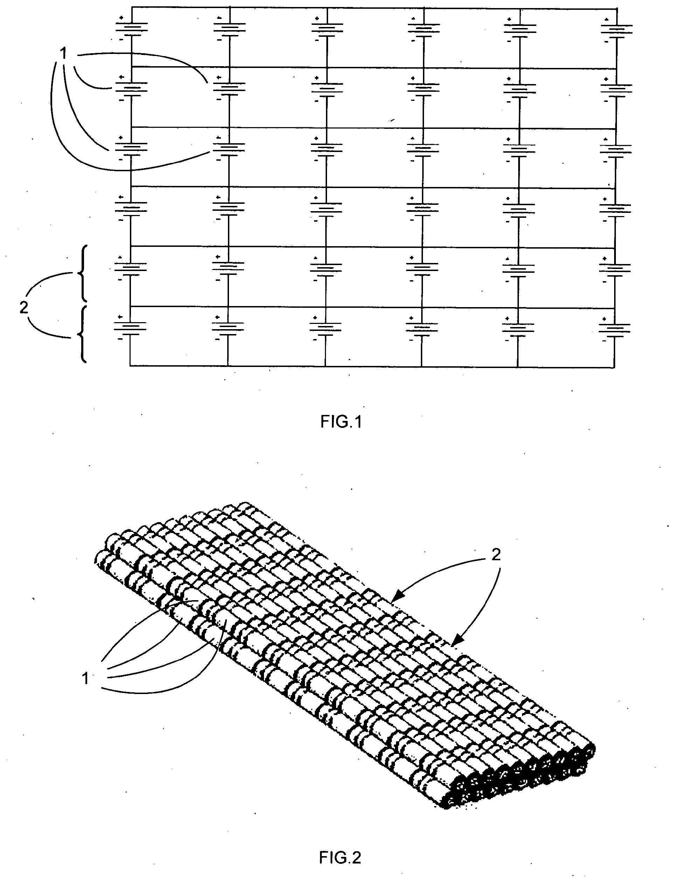

Les figures 1 et 2 représentent une batterie selon l'état de la technique, aussi appelée « pack batterie ». Un tel pack batterie, que nous appellerons simplement batterie par la suite, est composé d'une multitude de batteries élémentaires. Une telle batterie élémentaire se présente par exemple sous une forme cylindrique, comprend une multitude d'électrodes positives et négatives, se présentant sous la forme de cylindres concentriques imbriqués ou de couches enroulées en forme de spirale, séparés par des couches d'électrolytes et de membranes. Ces éléments représentent la partie active de la structure de la batterie élémentaire, c'est-à-dire qu'ils forment un ensemble qui participe directement à la fonction de stockage et de restitution d'énergie électrique. Dans cet exemple, cette partie active est de nature chimique. En remarque, une telle batterie élémentaire, aussi appelée cellule élémentaire, peut comprendre une partie active basée sur d'autres composants chimiques, ou une partie active de nature capacitive. D'autre part, la partie active de la batterie élémentaire est disposée dans un boîtier dont une première face externe forme la borne positive ou premier collecteur de courant de la batterie et une seconde face externe forme la borne négative ou second collecteur de courant. Ce boîtier a pour fonction le maintien et support de la partie active de la batterie, et son étanchéité vis-à-vis de l'extérieur. Il enferme un assemblage physique qui forme un ensemble monolithique figé, indissociable, dont la connectique électrique est non modifiable pour un utilisateur de la batterie élémentaire, qui voit un courant sortant égal au courant entrant sur ses deux bornes. Nous appellerons donc batterie ou cellule élémentaire, et même plus simplement cellule, cet ensemble formé par une partie active et un boîtier avec deux bornes. Une batterie représentée sur les figures 1 et 2 comprend plus précisément plusieurs étages ou modules 2, disposés en série, et chaque module comprend plusieurs cellules 1 disposées en parallèle, comme cela est illustré schématiquement sur la figure 1.

La figure 2 représente une architecture courante d'une telle batterie, pour laquelle chaque cellule présente une forme cylindrique et est par exemple une batterie de type lithium-ion. Dans cet exemple, chaque module 2 comprend deux rangées de dix cellules 1, dont les faces latérales cylindriques de cellules voisines sont en contact. De plus, la batterie comprend onze modules 2 superposés, disposés de sorte que les axes des cellules cylindriques des différents modules sont alignés pour que les cellules soient ainsi alignées dans leur direction longitudinale. Cette disposition permet ainsi d'obtenir un encombrement minimal.

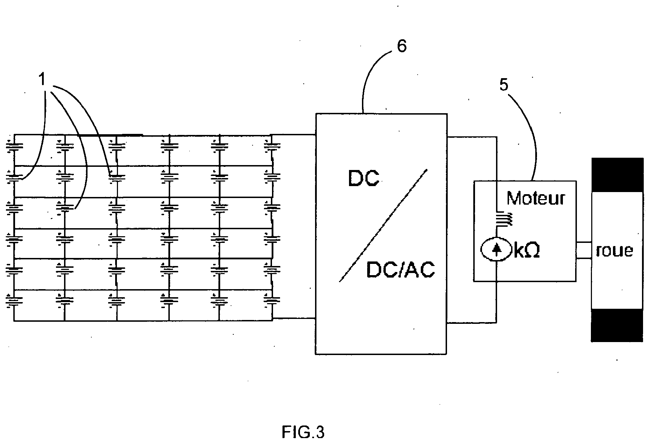

L'utilisation d'une telle batterie de l'état de la technique pour alimenter un moteur 5 nécessite un dispositif 6 intermédiaire de type convertisseur DC/DC ou DC/AC, disposé entre la batterie et le moteur 5, tel que représenté sur la figure 3. Le dispositif 6 a pour fonction d'ajuster la tension de sortie de la batterie aux besoins du moteur 5, afin de s'adapter ainsi à la vitesse et au couple demandé au moteur. En remarque, le même principe s'applique à toute charge alimentée par la batterie. D'autre part, lors de la recharge de la batterie, un dispositif équivalent doit être utilisé entre le réseau électrique et la batterie pour suivre la tension d'entrée du réseau électrique. L'utilisation de ces dispositifs intermédiaires reliés à la batterie présente plusieurs inconvénients, parmi lesquels la génération de pertes au niveau des transistors et autres composants utilisés, ce qui entraîne globalement une consommation énergétique supplémentaire. D'autre part, cela représente un encombrement supplémentaire.

La gestion d'une telle batterie de l'état de la technique comprend en général une observation des grandeurs électriques de sortie pour en déduire un diagnostic de son fonctionnement. Cette approche s'avère insuffisante car elle ne permet pas de déterminer avec précision les zones de la batterie, comme les modules ou certains groupes de cellules, qui sont par exemple défaillants. Il en résulte dans la pratique une mauvaise optimisation du fonctionnement de la batterie et une baisse très rapide de ses performances dès qu'elle présente une partie défaillante, accompagnée souvent d'une aggravation rapide de son état et un vieillissement prématuré.

Pour améliorer cette approche globale, il existe certains procédés de diagnostic qui consistent à observer certaines grandeurs au niveau des modules de la batterie. Cette seconde approche permet plus précisément d'observer localement le comportement particulier de certains modules de la batterie. Toutefois, sa mise en œuvre est complexe et nécessite l'utilisation de nombreux fils électriques, pour relier un dispositif central de diagnostic à chaque module, ce qui peut induire de forts risques électriques car les fils sont susceptibles de chauffer, ou de se dénuder par frottement puis de générer des courts-circuits, par exemple entre deux étages relativement éloignés et de différence de potentiel élevée. D'autre part, cette solution nécessite une isolation galvanique intermédiaire pour protéger le dispositif central de diagnostic, dont le potentiel associé à son alimentation peut-être très éloigné des potentiels présents dans la batterie. Enfin, elle ne permet d'agir que de manière insatisfaisante sur le fonctionnement global de la batterie.

Outre une telle batterie conventionnelle telle que présentée ci-dessus, le document FR2926168 décrit un circuit électrique comprenant une pluralité d'éléments de stockage d'énergie commutables, associés à un moyen générateur d'énergie, afin de fournir une tension variable en sortie pour s'adapter aux besoins d'un moteur. Une telle approche apporte une souplesse d'utilisation par rapport à la batterie conventionnelle décrite ci-dessus mais n'apporte aucune solution à tous les autres inconvénients mentionnés.

En complément, le document WO2006/100391 décrit un dispositif d'alimentation électrique comprenant deux unités de stockage d'énergie qui peuvent être disposées soit en série, soit en parallèle, par l'intermédiaire d'interrupteurs. Ce document ne répond pas non plus à tous les inconvénients mentionnés.

Ainsi, il existe un besoin d'une solution améliorée de stockage d'énergie permettant de résoudre au moins une partie des inconvénients des solutions existantes, et l'invention cherche à atteindre tout ou partie des objets suivants.

Un premier objet de l'invention est de proposer une solution de stockage d'énergie qui permet de garantir un fonctionnement fiable et allongé dans le temps selon la revendication 1.

Un second objet de l'invention est de proposer une solution de stockage d'énergie qui s'adapte facilement à différentes exigences d'utilisation, comme des besoins variables d'un moteur.

A cet effet, l'invention repose sur une batterie de stockage comprenant plusieurs cellules de stockage disposées dans plusieurs modules reliés entre eux en série, caractérisée en ce qu'elle comprend au moins un module comprenant une brique comprenant une borne inférieure et une borne supérieure, entre lesquelles sont agencées deux cellules et au moins trois interrupteurs, de sorte à pouvoir disposer les deux cellules en série ou en parallèle entre les deux bornes et en ce que la batterie comprend un circuit de commande des interrupteurs de ladite au moins une brique.

La au moins une brique peut comprendre une première branche verticale s'étendant entre ses bornes inférieure et supérieure et comprenant dans l'ordre une cellule et un interrupteur, une seconde branche verticale entre ses bornes inférieure et supérieure comprenant dans l'ordre un interrupteur et une cellule, et une branche transversale comprenant un interrupteur et reliant respectivement les bornes intermédiaires disposées entre la cellule et l'interrupteur de chacune des deux branches verticales.

La au moins une brique peut comprendre deux interrupteurs supplémentaires disposés respectivement sur chaque branche verticale du côté de la cellule.

La batterie peut comprendre un module comprenant une borne inférieure et une borne supérieure, entre lesquelles sont disposées deux briques, reliées par trois branches et trois interrupteurs disposés respectivement entre les deux bornes inférieures des deux briques, entre leurs deux bornes supérieures, et entre la borne supérieure de la première brique inférieure et la borne inférieure de la seconde brique supérieure, de sorte à pouvoir disposer les deux briques en série ou en parallèle.

La batterie peut comprendre un module comprenant une borne inférieure et une borne supérieure, entre lesquelles sont disposés plusieurs ensembles de plus de deux briques pouvant être disposées en série ou en parallèle, ces ensembles pouvant être disposés en série et/ou en parallèle entre les deux bornes inférieure et supérieure du module à l'aide de plusieurs interrupteurs.

La batterie peut comprendre un module comprenant une borne inférieure et une borne supérieure, entre lesquelles sont disposées quatre briques pour former une superbrique, cette superbrique comprenant un premier ensemble comprenant une première brique reliée à la borne inférieure du module, et reliée à une seconde brique reliée à la borne supérieure du module par l'intermédiaire de trois interrupteurs permettant de disposer ces deux briques en série ou en parallèle, et comprenant un second ensemble de deux autres briques disposées entre les deux bornes inférieure et supérieure du module en parallèle du premier ensemble des deux briques.

La batterie peut comprendre au moins une liaison électrique intermédiaire distincte des bornes supérieure et inférieure entre les deux ensembles de deux briques.

La batterie peut comprendre une borne inférieure et une borne supérieure entre lesquelles sont disposées plusieurs briques en parallèle, et/ou plusieurs ensembles de deux briques liées entre elles en parallèle, et/ou plusieurs superbriques en parallèle.

La batterie peut comprendre au moins un module qui comprend plusieurs interrupteurs pour pouvoir annuler la tension de sortie du module et/ou pour former un dispositif d'inversion de la tension de sortie du module (fonction de type pont en H).

Tous les modules de la batterie peuvent comprendre un dispositif de type pont en H d'inversion de leur tension de sortie, pour inverser, annuler la tension de sortie ou shunter un ou plusieurs module(s).

La batterie peut comprendre un circuit de commande d'au moins un interrupteur alimenté électriquement directement par au moins une cellule d'un module de la batterie.

La batterie peut comprendre au moins un interrupteur apte à shunter un ou plusieurs modules successifs de la batterie.

Le circuit de commande peut piloter au moins un transistor utilisé pour former un interrupteur de cellule, et/ou au moins un transistor utilisé pour former un interrupteur de module et/ou au moins un transistor pour former un dispositif d'inversion série/parallèle entre deux briques d'un module, et/ou au moins un transistor pour former un dispositif d'inversion ou d'annulation de la tension de sortie du module (fonction de type pont en H), et/ou au moins un transistor pour shunter plusieurs modules adjacents.

La batterie peut comprendre une carte électronique disposée entre chaque module de la batterie ou une unique carte électronique sur laquelle sont disposées tous les modules de la batterie ou plusieurs cartes électroniques associées chacune à un ou plusieurs module(s).

La batterie peut comprendre au moins un capteur de mesure d'une grandeur caractéristique de l'état des cellules d'un module et le circuit de commande des interrupteurs du module peut les commander en fonction de la grandeur caractéristique de l'état de ses cellules et en fonction de la demande d'une charge alimentée par la batterie.

La batterie peut comprendre un capteur de mesure du courant au niveau d'une cellule, et/ou un capteur de mesure de la tension aux bornes d'une cellule et/ou aux bornes de son interrupteur de cellule, et/ou un capteur de mesure de la température d'une cellule et/ou de mesure de spectrométrie d'impédance.

La batterie peut comprendre au moins un circuit de traitement au niveau d'un module et/ou un calculateur central, qui pilote(nt) les interrupteurs d'un module par l'intermédiaire du circuit de commande.

La batterie peut comprendre un calculateur central et un bus de communication reliant les différents modules au calculateur central par l'intermédiaire d'une isolation galvanique.

Les interrupteurs de la au moins une brique peuvent être des transistors. La batterie peut comprendre plusieurs parties de plusieurs modules comprenant des cellules de technologie électrochimique différente. L'invention porte aussi sur un procédé de gestion d'une batterie telle que définie précédemment, caractérisé en ce qu'il comprend une étape de détermination de la position des interrupteurs d'une brique de la batterie pour disposer ses deux cellules en série ou en parallèle selon la revendication 21.

Le procédé de gestion d'une batterie peut comprendre les actionnements suivants des interrupteurs d'une brique de la batterie :
- fermeture des interrupteurs disposés sur une branche verticale entre les bornes inférieure et supérieure d'une brique de la batterie, et ouverture d'un interrupteur disposé sur une branche transversale reliant respectivement les bornes intermédiaires disposées entre la cellule et un interrupteur de chacune des deux branches verticales, pour disposer les deux cellules de la brique en parallèle, ou
- ouverture des interrupteurs disposés sur une branche verticale entre les bornes inférieure et supérieure d'une brique de la batterie, et fermeture d'un interrupteur disposé sur une branche transversale reliant respectivement les bornes intermédiaires disposées entre la cellule et un interrupteur de chacune des deux branches verticales, pour disposer les deux cellules de la brique en série.

Le procédé de gestion d'une batterie peut comprendre la mise en parallèle des deux cellules d'une brique lorsque le courant demandé en sortie de la batterie dépasse un certain seuil, et une mise en série des deux cellules de la brique lorsque la tension demandée en sortie de la batterie dépasse un certain seuil.

Le procédé de gestion d'une batterie peut comprendre les actionnements suivants des interrupteurs d'une brique de la batterie :
- fermeture des interrupteurs disposés sur une branche verticale entre les bornes inférieure et supérieure d'une brique de la batterie et d'un interrupteur positionné sur la branche transversale et ouvertures d'interrupteurs supplémentaires disposés respectivement sur chaque branche verticale du côté de la cellule, pour obtenir une différence de tension nulle entre les bornes supérieure et inférieure de la brique,
- fermeture des interrupteurs disposés sur une première branche verticale entre les bornes inférieure et supérieure d'une brique et ouverture d'au moins un autre interrupteur pour déconnecter la cellule de la seconde branche verticale de la brique et obtenir le fonctionnement de la brique avec uniquement la cellule de la première branche verticale.

Le procédé de gestion d'une batterie peut comprendre une étape d'alimentation électrique d'un circuit de commande d'un interrupteur d'une brique de la batterie à partir d'au moins une cellule de la batterie.

Le procédé de gestion d'une batterie peut comprendre les étapes suivantes :
- mesure d'au moins une grandeur au niveau d'une cellule de la batterie, représentative de l'état de la cellule ;
- transmission de ladite grandeur mesurée à au moins un circuit de traitement ou un calculateur ;
- détermination de la position d'un interrupteur d'une brique en prenant en compte ladite grandeur mesurée ;
- commande de l'ouverture ou fermeture d'au moins un interrupteur de la brique comprenant ladite cellule.

Le procédé de gestion d'une batterie peut comprendre une étape consistant à comparer une grandeur mesurée à un seuil pour diagnostiquer l'état de la cellule, estimer la charge de la cellule et/ou son état de santé.

Le procédé de gestion d'une batterie peut comprendre tout ou partie des étapes suivantes :
- équilibrage des modules et/ou cellules entre eux/elles, en utilisant en priorité les modules et/ou cellules les plus chargé(e)s lorsque la batterie est connectée à une charge et les modules et/ou les cellules les moins chargé(e)s lors de la recharge de la batterie ;
- équilibrage des modules et/ou cellules en modifiant le taux moyen d'utilisation des modules et/ou cellules, mais sans utiliser les mêmes modules et/ou cellules en permanence, de sorte que la charge des modules et/ou cellules s'équilibre ;
- choix d'utilisation des modules en fonction du courant qu'ils peuvent fournir ;
- limitation de l'utilisation des modules et/ou cellules dont la température est la plus élevée ou utilisation de manière préférentielle lorsque le courant demandé est plus faible ;
- maintien homogène de la température au sein de la batterie.

Le procédé de gestion d'une batterie peut comprendre une étape d'ouverture/fermeture cyclique d'au moins un interrupteur d'une brique de la batterie de sorte de déconnecter/connecter une cellule de la brique, le rapport cyclique étant fixé en fonction du temps total d'utilisation de ladite cellule, lui-même déterminé en fonction du besoin global en courant et tension de la batterie et en fonction du diagnostic de la cellule considérée.

Le procédé de gestion d'une batterie peut comprendre une étape de communication par courant porteur entre un circuit de traitement d'une brique et celui d'une autre brique ou un calculateur central ou une charge.

Le procédé de gestion d'une batterie peut comprendre une étape de régulation de la tension de sortie de la batterie qui comprend une étape d'ouverture/fermeture d'interrupteurs de briques de la batterie pour suivre une consigne de tension de sortie imposée.

Le procédé de gestion d'une batterie peut comprendre une étape de déconnexion de toutes les cellules de la batterie en cas d'arrêt prolongé de la batterie ou d'incident.

Le procédé de gestion d'une batterie peut comprendre une étape de diagnostic du fonctionnement de tout ou partie des interrupteurs.

Le procédé de gestion d'une batterie peut comprendre une étape d'estimation de l'état de santé SOH d'une cellule comprenant un cycle de charge et décharge de ladite cellule, pendant le fonctionnement normal du reste de la batterie.

Le procédé de gestion d'une batterie peut comprendre une étape d'estimation de l'impédance électrique complexe d'une cellule en observant sa réponse en courant et/ou tension à sa connexion et/ou déconnexion soit forcée, soit du lors du fonctionnement normal de la batterie.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure d'une batterie selon un état de la technique.
La figure 2 représente en perspective l'architecture réelle d'une telle batterie de l'état de la technique.
La figure 3 représente schématiquement le circuit électrique d'un moteur utilisant une telle batterie de l'état de la technique pour son alimentation.
La figure 4 représente schématiquement une batterie selon un mode de réalisation de l'invention.
La figure 5 illustre une variante du mode de réalisation précédent.
La figure 6 illustre un autre mode de réalisation de l'invention.
La figure 7 illustre une variante du mode de réalisation précédent.
La figure 8 illustre les éléments de gestion de la variante du mode de réalisation précédent.
La figure 9 représente une variante pour la réalisation d'une alimentation locale des éléments de gestion des modes de réalisation de l'invention.
Les figures 10 et 11 illustrent deux variantes d'un autre mode de réalisation de l'invention.
La figure 12 représente l'implémentation physique des fonctions électriques de l'invention dans l'architecture d'une batterie selon un mode de réalisation de l'invention.
La figure 13 illustre plus précisément les composants présents sur chaque carte électronique du mode de réalisation de l'invention.
Les figures 14a et 14b illustrent une variante de réalisation du mode de réalisation de l'invention.
La figure 15 représente de manière plus détaillée l'architecture de la carte électronique selon cette variante de réalisation du mode de réalisation de l'invention.
La figure 16 représente une vue fonctionnelle de l'architecture d'une batterie selon un mode de réalisation de l'invention.
La figure 17 illustre un mode de réalisation d'un bâti intégrant une batterie selon l'invention.
La figure 18 illustre le bâti précédent intégré au sein d'un véhicule automobile selon un mode de réalisation de l'invention.
La figure 19 illustre un mode de réalisation d'une commande asservie de la batterie selon l'invention.
La figure 20 représente un exemple de tension qui peut être fournie par la batterie selon l'invention.
La figure 21 illustre schématiquement la mise en œuvre du principe de communication par courant porteur au sein de la batterie selon un mode de réalisation de l'invention.
Les figures 22 à 24 illustrent trois variantes de réalisation d'une batterie avec plusieurs interrupteurs parallèles distincts selon un mode de réalisation de l'invention.
La figure 25 illustre une batterie adaptée pour délivrer une tension triphasée.

Selon un aspect avantageux de l'invention, des interrupteurs sont intégrés au niveau de tout ou partie des cellules d'une batterie, pour permettre, par l'intermédiaire d'un circuit de commande de ces interrupteurs, d'utiliser ou non certaines cellules en fonction des besoins et des mesures effectuées.

Les cellules sont de plus organisées sous la forme de regroupements particuliers, pour atteindre une architecture permettant facilement de disposer des cellules en série ou en parallèle, pour s'adapter au besoin d'une charge et/ou à l'état des cellules, et obtenir une optimisation de la batterie, l'augmentation de ses performances et de sa durée de vie. La batterie intègre de plus avantageusement des capteurs de mesure au niveau de tout ou partie des cellules ou modules.

Dans les figures suivantes, les mêmes références seront utilisées pour des éléments identiques ou similaires dans chaque mode de réalisation de l'invention, pour une raison de simplification de la description.

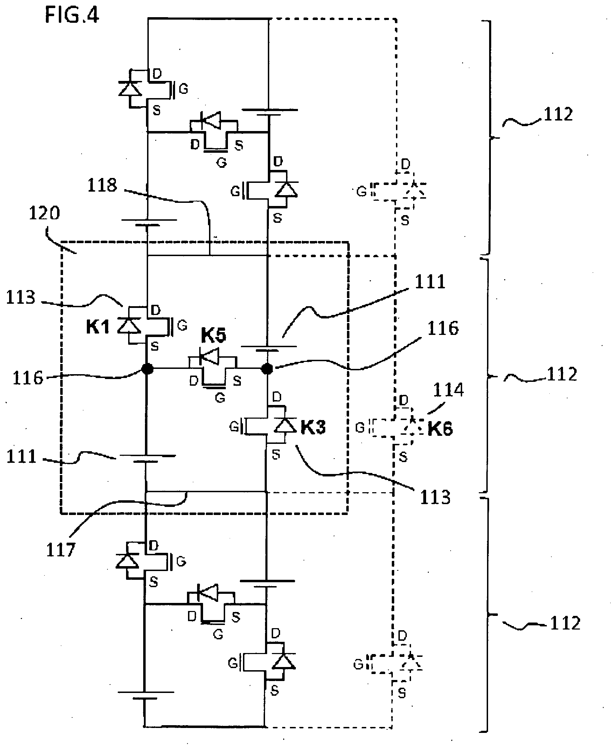

La figure 4 représente schématiquement un mode de réalisation de l'invention dans lequel une batterie comprend une multitude de cellules 111 organisées en plusieurs modules 112.

Dans ce mode de réalisation, chaque module 112 comprend une borne inférieure 117, reliée à un module voisin inférieur, et une borne supérieure 118 pour une liaison série avec le module voisin supérieur. Un pont en H placé entre les bornes 117 et 118 peut être utilisé pour permuter les connexions de ces bornes 117 et 118 vis-à-vis des modules voisins supérieur et inférieur. Chaque module est composé de briques 120 disposées en parallèle entre ses deux bornes 117, 118. Dans ce mode de réalisation, chaque brique 120 comprend deux branches parallèles s'étendant entre ses deux bornes inférieure 117 et supérieure 118, sur lesquelles sont respectivement disposés dans l'ordre suivant de bas en haut : une cellule 111 et un interrupteur K1 sur la première branche, et un interrupteur K3 et une cellule 111 sur la seconde branche parallèle. De plus, une branche intermédiaire comprenant un troisième interrupteur K5 relie les deux bornes intermédiaires 116 disposées sur chacune des deux branches parallèles entre la cellule 111 et l'interrupteur K1, K3.

Cette architecture permet à une brique 120 d'occuper les différentes configurations suivantes en fonction de la position des interrupteurs :
- si les interrupteurs K1 et K3 sont fermés et l'interrupteur K5 est ouvert, alors les deux cellules 111 de la brique sont disposées en parallèle : cette configuration permet par exemple d'obtenir une restitution de courant maximal en sortie de la brique ;
- si les interrupteurs K1 et K3 sont ouverts et K5 fermé, alors les deux cellules 111 de la brique sont disposées en série : cette configuration permet par exemple d'obtenir la tension maximale en sortie de la brique, et la restitution d'une tension maximale d'un module 112 ;
- si l'interrupteur K5 est ouvert et un seul des deux interrupteurs K1 ou K3 est fermé, alors une seule des deux cellules de la brique est active, participe par exemple à la restitution d'énergie de la batterie ;
- enfin, si tous les interrupteurs sont ouverts, les deux cellules de la brique sont déconnectées du reste de la batterie.

Il apparaît ainsi que cette architecture permet à chaque brique et donc chaque module de fournir une tension simple ou double, un courant nul, simple ou double, simplement en choisissant la position des trois interrupteurs K1, K3, K5 disposés au niveau des cellules d'une brique. Pour cette raison, nous appellerons simplement « interrupteur de cellule 113» par la suite ces trois interrupteurs. Dans un cas particulier de réalisation, une tension nulle sur le module est possible si les interrupteurs K1 et K3 sont bidirectionnels en tension, c'est-à-dire sans diode inverse : la tension nulle ne peut alors être imposée par le module que via la fermeture de l'interrupteur optionnel K6.

Sur le mode de réalisation choisi, chaque module 112 comprend aussi un interrupteur K6 114 en parallèle des briques 120 du module 112, permettant ainsi de court-circuiter l'ensemble du module : pour cela, nous l'appellerons « interrupteur de module 114 » par la suite. Cet interrupteur est utile lorsque toutes les briques d'un module sont en configuration déconnectée, afin de conserver une liaison électrique entre les différents modules de la batterie.

L'utilisation d'une telle batterie pour alimenter une charge, comme un moteur, permet de s'affranchir des convertisseurs intermédiaires utilisés dans l'état de la technique. Ce fonctionnement sera explicité par la suite.

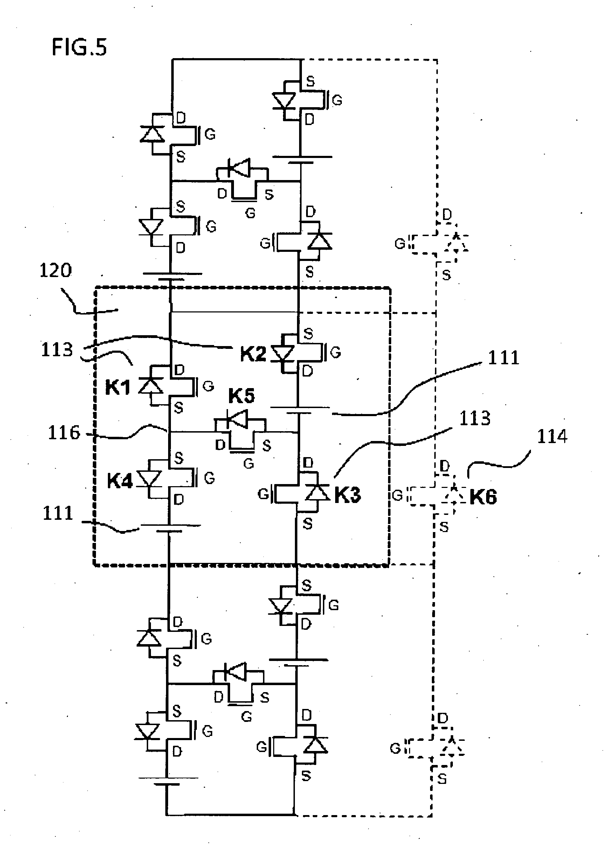

La figure 5 représente une variante de réalisation dans laquelle chaque brique 120 comprend deux interrupteurs K2, K4 supplémentaires, disposés sur chaque branche parallèle, du côté de la cellule 111 par rapport à la borne intermédiaire 116. Une telle architecture offre des configurations supplémentaires, en plus des configurations déjà explicitées en rapport avec la réalisation précédente. Elle permet notamment d'imposer une différence de tension nulle entre les deux bornes 117, 118 d'un module, en fermant les trois interrupteurs K1, K3, K5 et en ouvrant les deux autres interrupteurs K2, K4.

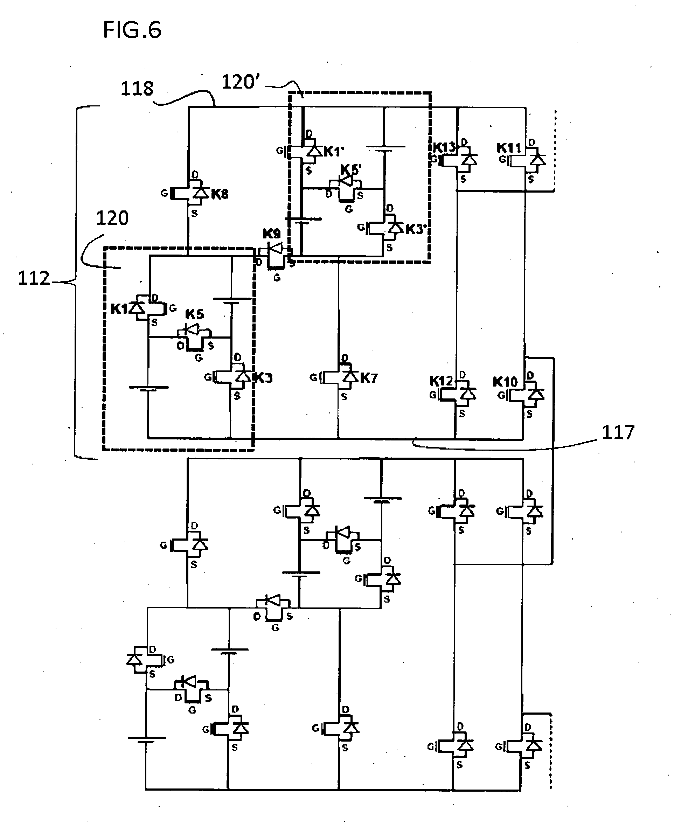

La figure 6 illustre une autre réalisation dans laquelle les briques présentées dans les réalisations précédentes sont associées deux par deux dans chaque module 112 afin de permettre la mise en série ou en parallèle de cellules quatre par quatre, et non plus deux par deux. En effet, deux briques 120, 120', telles que décrites dans les réalisations précédentes, sont reliées par trois branches et trois interrupteurs supplémentaires K7, K8, K9 disposés respectivement entre les deux bornes inférieures des deux briques, entre leurs deux bornes supérieures, et entre la borne supérieure de la première brique inférieure 120 et la borne inférieure de la seconde brique supérieure 120'.

Les trois interrupteurs supplémentaires dits « intermédiaires » K7, K8, K9 entre les deux briques 120, 120' peuvent occuper les configurations suivantes :
- K7 et K8 fermés, K9 ouvert : les deux briques 120, 120' sont disposées en parallèle entre les deux bornes 117, 118 du module ;
- K7, K8 ouverts, K9 fermé: les deux briques 120, 120' sont disposées en série entre les deux bornes 117, 118 du module.

Comme les cellules 111 de chaque brique 120, 120' peuvent elles-mêmes se trouver en série ou en parallèle, comme explicité précédemment, il apparaît que les configurations suivantes sont possibles :
- les quatre cellules 111 peuvent se trouver en parallèle entre les bornes 117, 118 du module ;
- les quatre cellules 111 peuvent se trouver en série entre les bornes 117, 118 du module ;
- deux ensembles de deux cellules en parallèle peuvent se trouver en série ;
- deux ensembles de deux cellules en série peuvent se trouver en parallèle ;
- Un ensemble de deux cellules en série peut se trouver en série avec un ensemble de deux cellules en parallèle.

En remarque, quatre interrupteurs K10, K11, K12 et K13 supplémentaires sont disposés entre les bornes 117 et 118 du module, pour pouvoir inverser ou annuler la tension de sortie du module. Ces interrupteurs forment ainsi un pont en H. L'annulation de la tension de sortie se fait en fermant les interrupteurs K10 et K12 ou K11 et K13, ce qui évite l'utilisation de l'interrupteur de module K6 proposé dans la réalisation de la figure 5 et la nécessité que les interrupteurs K1, K3, K1' et K3' soient réversibles en tension. En fait, on peut ainsi imposer une tension nulle en sortie du pont en H même si la tension entre les bornes 117 et 118 n'est pas nulle.

Il apparaît ainsi que cette architecture permet à chaque module de fournir une tension nulle, simple, double, triple, quadruple, négative simple, négative double, négative triple, négative quadruple, un courant positif ou négatif nul, simple, triple ou quadruple, simplement en choisissant la position des treize interrupteurs K1, K3, K5, K1', K2', K3', K7, K8, K9, K10, K11, K12 et K13 disposés au niveau des cellules d'une brique.

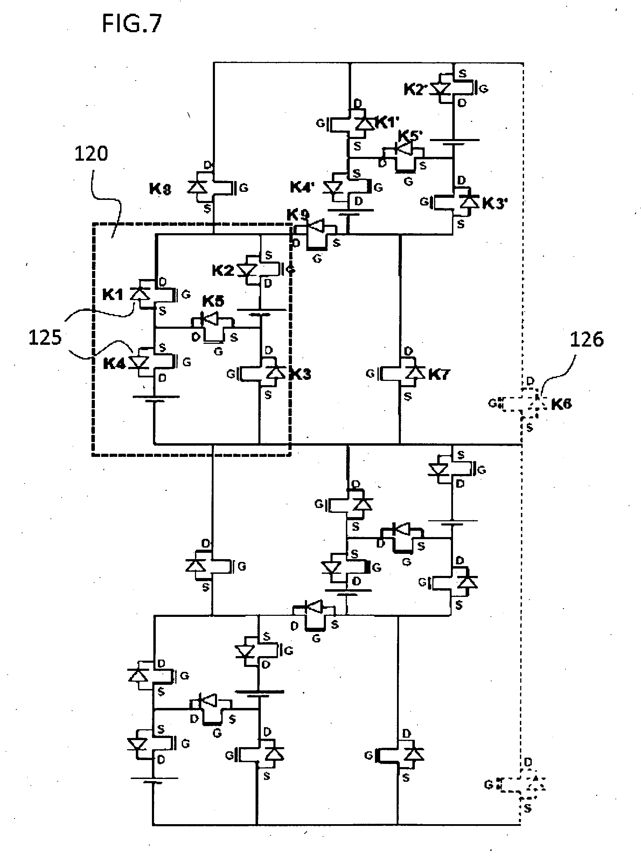

La figure 7 représente une variante de la réalisation précédente, dans laquelle chaque brique 120 comprend cinq interrupteurs de cellule 113 K1, K2, K3, K4, K5, de manière similaire à la réalisation illustrée sur la figure 5. D'autre part, les modules sont simplement disposés en série, sans les interrupteurs K10 à K13 prévus dans la réalisation précédente.

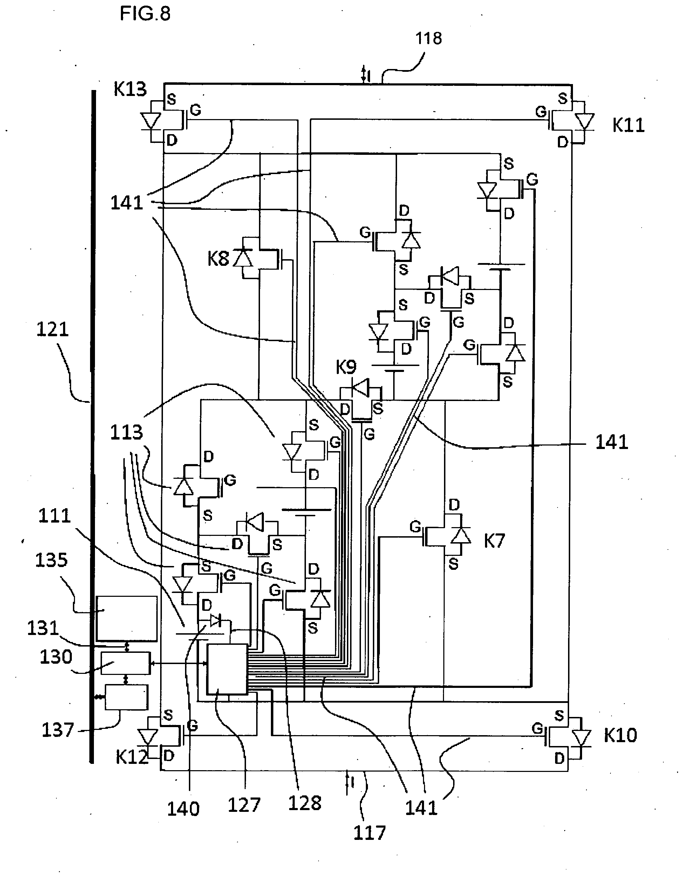

La figure 8 montre de manière schématique l'architecture prévue au niveau d'un module pour la gestion d'une telle batterie. Cette même architecture de gestion peut aisément être implémentée sur toutes les autres réalisations de la batterie.

Un ou plusieurs capteurs de mesure, non représentés, pour mesurer par exemple la température, la tension et/ou le courant, sont prévus pour chaque cellule du module 112 et communiquent leurs mesures à une unité de mesure 135. Les mesures effectuées par ce ou ces capteurs sont transmises à un circuit de traitement 130 local, via un multiplexeur par exemple, par des voies de communications non représentées. Le circuit de traitement 130 reçoit ainsi ces données par une voie communication 131 effectuant une numérisation, de type « ADC input » ; ou en variante, ces signaux arrivent déjà numérisés, cette numérisation étant réalisée au niveau du multiplexeur. Selon une réalisation possible, le circuit de traitement 130 peut être un microcontrôleur disposant d'un nombre d'entrée/sortie suffisant pour interroger l'ensemble des capteurs. Tous les transistors utilisés pour former les interrupteurs de cellule 113, pour former le dispositif de mise en série/parallèle des briques du module (K7, K8, K9), et pour former le dispositif d'inversion de la tension de sortie du module (fonction de type pont en H) (K10 à K13), sont pilotés par un circuit de commande 127 de puissance qui leur transmet des signaux de commande 141, sous les ordres du circuit de traitement 130. Enfin, ce dernier est relié à un calculateur central par un bus de communication 121 et par l'intermédiaire d'une interface 137 formant une isolation galvanique.

Tous ces composants associés à un seul module sont alimentés localement, c'est-à-dire par la tension d'au moins une des cellules 111 du module 112, voire d'un module voisin. A titre d'exemple, le circuit de commande 127, généralement appelé par la dénomination anglo-saxonne « driver », est alimenté électriquement par une liaison 128 lui permettant de récupérer une différence de tension correspondant sensiblement à la tension de la cellule la plus proche, légèrement diminuée par une chute de tension (par exemple proche de 0,6 V) au niveau d'une diode 140 disposée sur la liaison 128.

En variante non représentée, le circuit de commande 127 est alimenté électriquement par des liaisons 128 avec plusieurs cellules du module, lui permettant de récupérer une différence de tension correspondant sensiblement à la tension de la cellule la plus chargée, légèrement diminuée par une chute de tension (par exemple proche de 0,6 V) au niveau de la diode 140 disposée sur les liaisons 128.

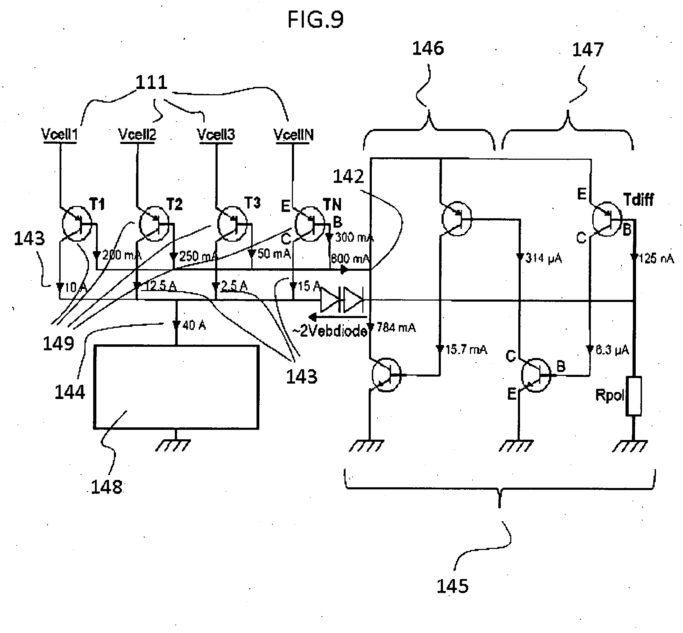

La figure 9 illustre une variante de réalisation du schéma électrique précédent pour permettre d'obtenir une alimentation locale des composants électroniques d'un module à partir de la tension stockée par les cellules du module considéré, voire d'un module voisin. Pour une raison de simplification, les composants électroniques ne sont pas détaillés, mais ils comprennent au moins un circuit de commande et des interrupteurs, comme explicité ci-dessus. Dans cette variante, un transistor 149 PNP bipolaire est associé à chaque cellule 111 du module. Tous ces transistors 149 sont commandés par un même courant d'une borne 142 d'un dispositif de commande 145. Il en résulte en sortie 143 de chaque transistor un courant dont l'intensité dépend la tension de chaque cellule 111, c'est-à-dire de l'état de charge et de santé de chaque cellule 111. Ces courants sont additionnés afin d'alimenter les composants électroniques par un courant 144 résultant. La commande des transistors 149 est telle que le courant 144 final d'alimentation atteint une valeur souhaitée. La solution permet de solliciter les différentes cellules du module en fonction de leur état, de leur tension disponible.

Cette solution évite de plus d'avoir la chute de tension entre la tension disponible au niveau du module et celle réellement exploitable par les composants électroniques, comme dans la réalisation décrite ci-dessus en référence avec la figure 8, du fait de l'utilisation de la diode 140. Cette chute de tension peut notamment être gênante dans une réalisation pour laquelle les cellules seraient des cellules basse tension, de valeur 1.5 V par exemple.

Le dispositif de commande 145 comprend un dispositif d'amplification comprenant deux étages d'amplification 146 et 147 selon ce mode de réalisation pour permettre de mettre en œuvre la commande du dispositif d'alimentation décrit ci-dessus sans nécessiter une puissance trop importante, qui engendrerait une chute de tension au niveau du module, ce qui est évité dans cette réalisation. Pour cela, un premier courant très faible est prélevé sur le module, au niveau d'un premier transistor Tdiff, puis amplifier par une cascade d'amplification, pour atteindre la valeur de commande souhaitée sur la borne 142. Le courant de commande sur la borne 142 s'ajuste automatiquement en fonction de la demande en courant des composants électroniques 148, ce qui limite celui-ci au strict nécessaire et en temps réel et limite ainsi la consommation moyenne liée à cette commande.

Les valeurs numériques illustrent un exemple d'implémentation permettant d'atteindre un courant d'alimentation de 40 A en prélevant un courant de 125 nA pour sa commande.

Si on souhaite alimenter des composants électroniques de la batterie à partir de cellules susceptibles d'être mises en série, c'est-à-dire potentiellement déconnectées du potentiel bas 117 d'un module auquel elles appartiennent, et pouvant monter à un potentiel relativement élevé par rapport au besoin en tension de ces composants à alimenter, alors des transistors NMOS à déplétion peuvent être placés entre le potentiel haut des cellules et les transistors bipolaires 149. Ces transistors ont pour propriété de s'ouvrir lorsque la tension grille-source Vgs est négative et devient, en valeur absolue, supérieure à un seuil qui dépend du type de transistor utilisé. En choisissant un transistor à déplétion, dont la tension de seuil correspond sensiblement à la tension d'alimentation souhaité du composant électronique ou plus largement du circuit que l'on souhaite alimenter, et en connectant la source de ce transistor du coté du transistor bipolaire et sa grille au potentiel bas de la borne 117 du module, alors le transistor aura tendance à s'ouvrir dés que la tension de source (du coté du bipolaire) tendra à être supérieure au seuil.

Le circuit de commande 127 a pour fonction de générer des signaux de commande 141 vers les différents transistors du module pour les actionner, remplissant ainsi une fonction de commande des interrupteurs. De manière similaire et non représenté pour une question de clarté des figures, tous les composants électroniques du module peuvent être alimentés selon la même solution, comme le circuit de traitement 130 permettant d'estimer l'état des interrupteurs, un éventuel système de communication, etc.

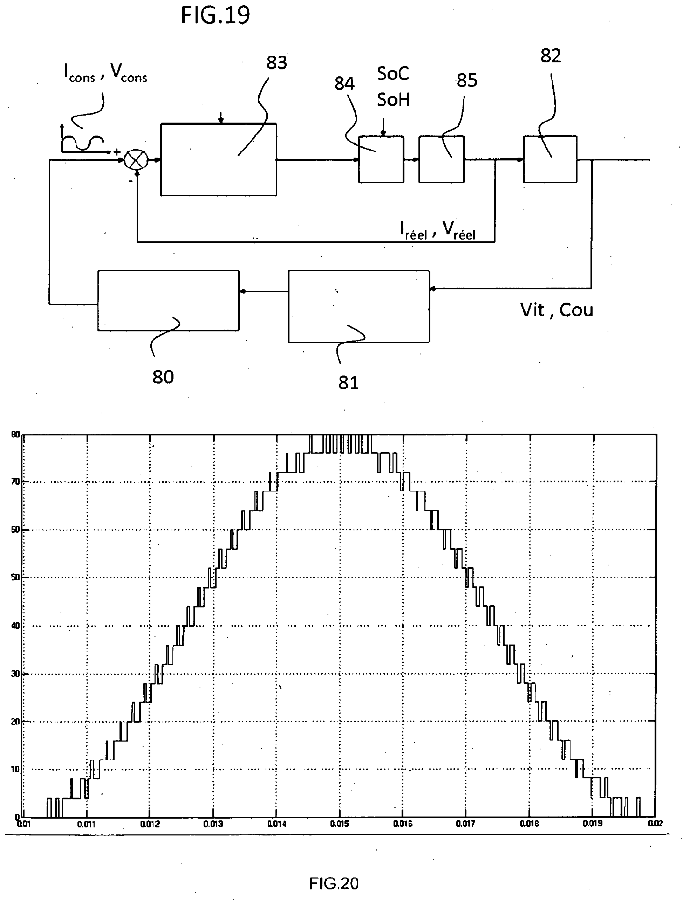

Comme cela a été décrit, chaque module 112 de la batterie dispose d'une intelligence propre grâce à son circuit de traitement 130 et participe ainsi au procédé de gestion de la batterie, en coopération avec le calculateur central 122 qui pilote l'ensemble des modules. Ce dernier sera décrit plus en détail ultérieurement, en référence avec la figure 19.

D'autre part, selon une réalisation avantageuse, tous les composants de puissance associés à un module sont alimentés directement par la tension disponible au niveau du module correspondant, notamment le circuit de commande 127 des transistors, comme cela a été décrit précédemment. Un tel circuit de commande, alimenté par son module associé, est alors isolé électriquement des autres modules et/ou des potentiels électriques extérieurs au module. Une telle réalisation présente l'avantage de supprimer le risque de piloter un certain transistor avec un potentiel très différent de celui de l'étage, qui pourrait conduire à sa destruction ou à sa mise en court-circuit. De plus, cette solution apporte l'avantage supplémentaire de permettre la réduction des connexions entre les composants du circuit de commande et la source d'alimentation, puisqu'il est possible de les regrouper à une courte distance les uns des autres et de la source de tension, notamment en positionnant les transistors au plus près des cellules à connecter. Enfin, l'utilisation de connexions très courtes réduit aussi fortement tout risque de court-circuit, par exemple entre deux modules.

Ainsi, selon la réalisation avantageuse décrite ci-dessus, tous les interrupteurs Ki internes à la structure de la batterie sont pilotés par un circuit de commande 127 alimenté par au moins une cellule de la batterie elle-même, c'est-à-dire alimenté localement, sans recours à une alimentation extérieure. D'autre part, le pilotage d'un interrupteur est de préférence réalisé par un circuit de commande suffisamment proche, alimenté par au moins une cellule du module le plus proche ou à proximité, pour mettre en jeu des tensions d'un même ordre de grandeur entre le circuit de commande et l'interrupteur piloté, par exemple le transistor piloté. Pour cela, il est avantageusement choisi de piloter un interrupteur, dont une des bornes, de source ou drain dans le cas d'un transistor NMOS par exemple, est reliée à une tension d'un certain module par un circuit de commande alimenté par ce même module ou un module adjacent, plus exactement par au moins une cellule de l'un de ces modules. Plus généralement, il pourra être choisi tout circuit de commande dont la liaison d'alimentation se trouve sur un module dont la différence de potentiel avec les bornes de l'interrupteur ne dépasse pas un seuil prédéfini, qui risquerait d'endommager l'interrupteur, de créer une situation de risque électrique. Ce seuil est défini par des normes de sécurité et dépend du type d'interrupteur implémenté. Cette alimentation locale, de proximité, présente le second avantage de permettre l'utilisation de liaisons de pilotage de faible longueur entre le circuit de commande et l'interrupteur.

Ensuite, il faut noter que le circuit de commande doit permettre l'actionnement fiable des différents interrupteurs. Dans un cas où les différents modules présentent une différence de potentiel de 3V et que l'interrupteur à commander est de type NMOS, un circuit de commande intègre de préférence un élévateur de tension tel qu'une pompe de charge pour augmenter la tension de 3V présente sur ses bornes d'entrée, et fournir en sortie une tension plus élevée pour l'actionnement des interrupteurs, en fonction de ces derniers. Dans le cas d'un transistor NMOS par exemple, il sera choisi d'alimenter sa grille par une tension telle que la différence de tension entre sa grille et sa source soit de l'ordre de 10 à 20 V inclus, pour garantir un actionnement fiable.

De plus, un dispositif de communication alimenté par l'étage peut permettre de communiquer avec les autres étages et/ou avec un système central via un lien hautement isolé pour éviter les risques électriques (court circuits entre étages, détérioration du système central placé à un potentiel très différents de quelques kV par rapport à celui d'un étage de la batterie, risque électrique pour le réparateur). Contrairement à un transformateur d'impulsion qui permettrait de commander les transistors de puissance au travers d'une isolation galvanique, l'utilisation d'un dispositif de communication alimenté par le module permet d'interpréter les signaux reçus (décodage de l'adresse, de l'information), de coder les signaux à transmettre et de mutualiser les lignes de communication alors que le transformateur d'impulsion permet juste de mettre « on » ou « off » le transistor de puissance avec une ligne de connexion individualisée à chaque transistor. Le dispositif de communication peut être par exemple une interface I2C présente dans de nombreux microcontrôleurs, que l'on relit à un bus de communication mutualisé à chaque étage via une isolation galvanique.

Dans l'exemple décrit ci-dessus, le procédé de gestion de la batterie est mis en œuvre par la coopération d'un circuit de traitement 130 local, disposé au niveau de chaque module, et d'un calculateur central 122. L'ensemble des fonctions de gestion de la batterie pourra donc être mis en œuvre par cette combinaison. Plusieurs modes de réalisation peuvent ainsi être imaginés, en reportant certaines fonctions de gestion du niveau local au niveau central ou inversement.

Les différents interrupteurs Ki sont réalisés à l'aide de transistors de puissance, de préférence des transistors de type NMOS, qui apportent un gain en conductivité dans leur état passant par rapport à des transistors PMOS qui pourraient en variante être utilisés. En variante, il est aussi possible d'utiliser d'autres types de transistors tel que des bipolaires, FET, JFET, IGBT, etc., ou encore à base de GaN, SiC, etc. On peut aussi placer plusieurs transistors en parallèle pour mieux assurer le passage du courant.

Comme cela a été vu, chaque brique 120 comprend entre 3 et 5 transistors de cellule 113 et au moins deux cellules 111, et en option un transistor de module 114. Tous ces transistors sont associés à des diodes 125, 126 montées en parallèle, par exemple visibles sur la figure 7, qui sont intégrées dans les transistors si ce sont des transistors de puissance discrets NMOS ou en variante sont des diodes distinctes, pour représenter leur caractéristique de laisser passer le courant en sens inverse.

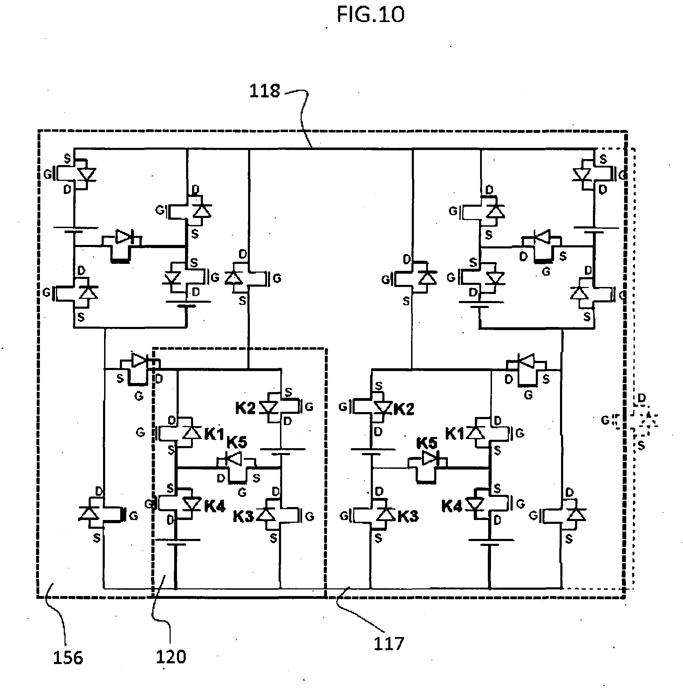

La figure 10 illustre une autre réalisation d'une batterie dont un module 112 comprend un nouvel élément de base qui consiste en une association de quatre briques 120 telles que présentées précédemment, formant une structure de base, que nous appellerons «superbrique» 156. Cette superbrique comprend une première brique reliée à la borne inférieure 117 du module, et reliée à une seconde brique reliée à la borne supérieure 118 du module par l'intermédiaire de trois interrupteurs K12, K13, K14 permettant de disposer ces deux briques en série ou en parallèle, selon un fonctionnement explicité précédemment. Cette même association de deux briques est disposée entre les deux bornes inférieure 117 et supérieure 118 du module en parallèle des deux briques décrites précédemment. Ces quatre briques forment une superbrique, qui sert de base à l'architecture de la batterie. Cette dernière comprend donc une multitude d'autres superbriques, non représentées, disposées sur le même module en parallèle de la superbrique illustrée et/ou sur les autres modules. Cette superbrique offre une multitude de possibilités pour agencer huit cellules, soit toutes en parallèle, soit en deux branches parallèles de quatre cellules en série chacune, soit selon des configurations intermédiaires comme quatre branches parallèles de deux cellules en série chacune par exemple.

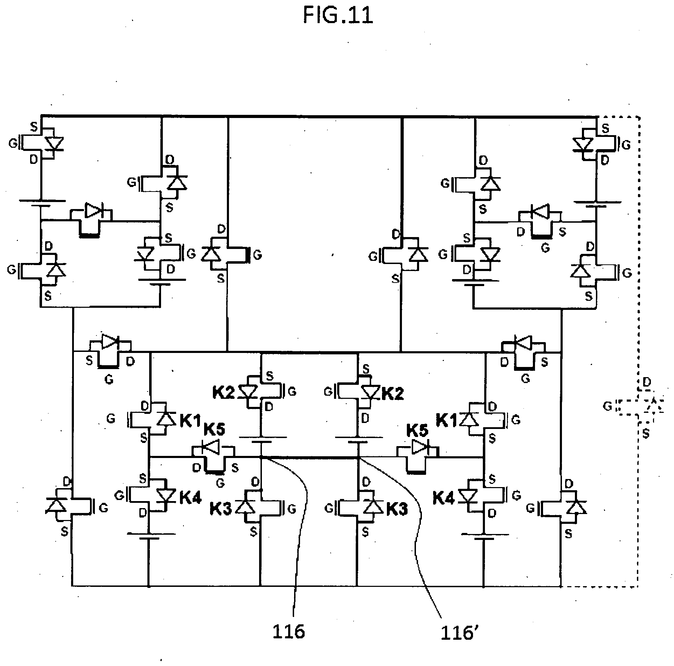

La figure 11 présente une variante de la réalisation précédente dans laquelle deux bornes intermédiaires 116, 116' des deux briques inférieures de la superbrique sont reliées, ainsi que les deux bornes supérieures de ces deux mêmes briques. Cette configuration offre la possibilité supplémentaire de mettre en série une cellule d'une des deux briques inférieures avec une cellule de l'autre brique par exemple.

En variante, d'autres liaisons électriques entre les bornes des quatre briques de la superbrique peuvent être implémentées, comme une liaison entre des bornes intermédiaires des deux briques supérieures, de manière similaire au schéma choisi pour les deux briques inférieures, et/ou une liaison entre les autres bornes intermédiaires des deux briques inférieures, etc.

Le fonctionnement d'une batterie telle que représentée va maintenant être expliqué. Lors de son utilisation dans une fonction de restitution de charges, pour alimenter par exemple un moteur en configuration habituelle de fonctionnement, au moins un des interrupteurs de cellule 113 est fermé, alors que le transistor de module 114 est ouvert, ce qui permet à une ou plusieurs cellules 111 de délivrer une tension et un courant qui traverse les transistors fermés et qui va finalement contribuer à l'alimentation du moteur. Un courant circule alors de la borne inférieure 117 vers la borne supérieure 118 de chaque module de la batterie (voire dans l'autre sens si la charge présente par exemple une puissance réactive). En revanche, si tous les interrupteurs de cellule sont ouverts et que l'interrupteur de module 114 est fermé, le courant va passer par cet interrupteur de module et les cellules du module sont isolées, ne participent pas à la génération de courant d'alimentation. Dans le cas où tous les interrupteurs 113, 114 sont ouverts, le courant consommé, c'est-à-dire de décharge de la batterie, va passer par la diode inverse 126 associée à un interrupteur de module 114, et la tension aux bornes 117, 118 du module reste égale à environ -0,6 V (la tension de la borne supérieure 118 est inférieure d'environ 0,6 V à celle de la borne inférieure 117 : cette chute de tension provient de la diode inverse 126 associée au transistor formant l'interrupteur de module 126). Enfin, il est évité de positionner aléatoirement des interrupteurs de cellule 113 fermés alors que l'interrupteur de module 114 est aussi fermé, pour ne pas mettre une cellule 111 en court circuit, pour des raisons de sécurité, sauf si cela est souhaité pour évacuer rapidement l'énergie d'une cellule qui monterait trop en température ou aurait commencé à prendre feu.

D'autre part, une batterie telle qu'illustrée précédemment est aussi adaptée à un fonctionnement en mode de recharge des cellules, dans lequel le courant est inversé et circule depuis la borne supérieure 118 vers la borne inférieure 117 de chaque module de la batterie. En situation normale, les interrupteurs de cellule 113 sont dans une position qui permet à un courant de traverser les cellules 111 pour les recharger. En revanche, si des cellules sont déconnectées de la batterie, par exemple si tous les interrupteurs de cellule 113 sont ouverts et que l'interrupteur de module 114 est fermé, le courant va passer par l'interrupteur de module et l'ensemble du module est alors isolé, n'est pas rechargé. Dans le cas où tous les interrupteurs 113, 114 sont ouverts, un courant va passer par les diodes inverses 125 associées aux transistors formant les interrupteurs de cellule 113 (K4, K5, K2, K9, K4', K5', K2' des figures 4, 5, 6, 7, 8, 10 et 11), pour leur mise en série ou parallèle plus précisément, et la tension aux bornes 117, 118 du module considéré reste égale à celle des cellules du module mises en série (par exemple 4*3,3=13,2 V) augmentée de la tension aux bornes des diodes 125 (par exemple + 3*0,6 V dans le cas de la figure 6). Enfin, il est de même évité dans cette phase de recharge de positionner les interrupteurs 113, 114 dans une configuration qui mettrait une cellule 111 en court-circuit, pour des raisons de sécurité, sauf si cela est souhaité pour évacuer rapidement l'énergie d'une cellule qui monterait trop en température ou aurait commencé à prendre feu.

Il est intéressant de noter que la tension d'un module reste faible, même quand tous les interrupteurs sont ouverts, ce qui permet d'utiliser des transistors supportant des tensions relativement faibles et peu coûteux pour remplir la fonction d'interrupteur, et dont la résistance à l'état passant est très faible, ce qui induit peu de pertes. Cela sera notamment vérifié si les cellules 111 présentent une tension inférieure à 40 V.

Selon le mode de réalisation de l'invention, chaque cellule comprend de plus au moins un capteur de mesure d'une grandeur caractéristique de l'état de la cellule. Ce capteur de mesure peut par exemple mesurer la tension et/ou l'intensité et/ou la température au niveau de la cellule concernée. Chaque capteur de mesure est de plus relié par un dispositif de communication à un dispositif intelligent, local et/ou distant, comme un calculateur de type microcontrôleur, qui reçoit les valeurs mesurées et met en œuvre un procédé de gestion de batterie, qui sera décrit plus en détail ultérieurement, pour déterminer un mode de fonctionnement optimisé de la batterie, en tenant compte des mesures effectuées.

Ce fonctionnement optimisé consiste en fait à déterminer les interrupteurs Ki qui doivent être ouverts et fermés. Cette configuration des différents interrupteurs de la batterie peut être modifiée en temps réel. Cette solution permet ainsi par exemple d'écarter les cellules défectueuses ou en surchauffe, d'aiguiller le courant au sein même de chaque module, d'équilibrer chacune des cellules de la batterie en temps réel. En remarque, le courant moyen demandé par une charge alimentée par la batterie est en général beaucoup plus faible que le courant crête demandé en pointe de consommation, ce qui permet à la batterie de fonctionner avec satisfaction la plupart du temps avec un nombre relativement important de cellules déconnectées, voire de modules déconnectés, si l'ensemble d'un module est considéré comme défectueux ou en surchauffe par exemple.

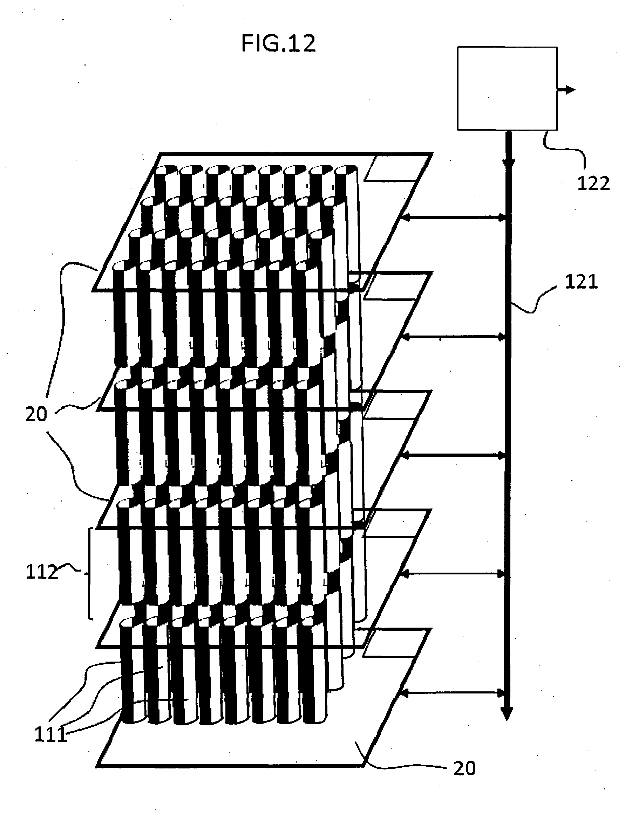

Les figures 12 à 14 représentent des exemples possibles de réalisation physique des fonctions électriques ajoutées par l'invention dans l'architecture d'une batterie selon un mode de réalisation de l'invention.

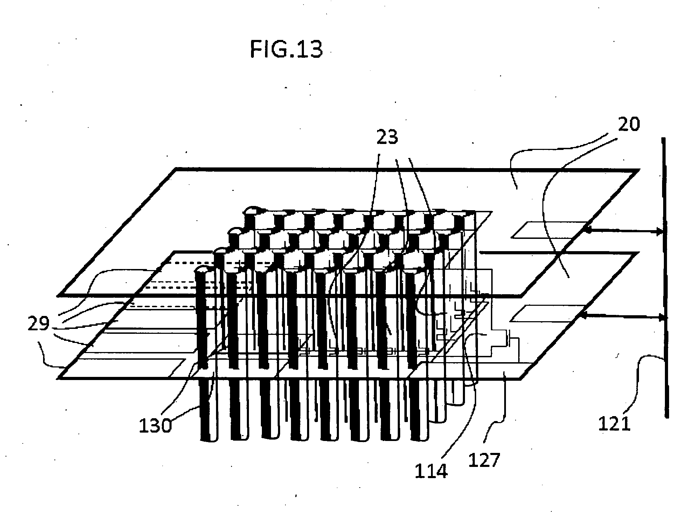

Les figures 12 et 13 illustrent une réalisation dans laquelle une carte électronique 20, qui comprend les composants explicités précédemment, notamment en référence avec la figure 8, est ajoutée pour chaque module de la batterie. Cette carte électronique se présente sous la forme d'un circuit imprimé positionné sur la face inférieure ou supérieure de chaque module. Ainsi, la batterie comprend une carte électronique 20 entre chaque module.

Ensuite, selon la réalisation représentée sur les figures 12 et 13, chaque carte électronique est reliée par un bus de communication 121 à un calculateur central 122, qui reçoit les mesures effectuées localement au sein d'un module de la batterie et met en œuvre un procédé de gestion de la batterie, comprenant notamment la transmission de commandes d'ouverture et/ou fermeture des interrupteurs de la batterie. Ce transfert de données par le bus de communication 121 peut nécessiter un éventuel multiplexage et numérisation des données, ainsi qu'une isolation galvanique (par transformateur ou optocoupleur). D'autre part, un circuit de commande 127 est placé sur chaque carte électronique et constitue un élément intermédiaire entre le calculateur 122 et les interrupteurs, permettant l'adaptation de la tension transmise aux transistors formant la fonction d'interrupteurs Ki pour la mise en œuvre des commandes du calculateur. Ces circuits de commande 127 peuvent de plus intégrer des fonctions de sécurité pour éviter par exemple tout court-circuit.

La figure 13 illustre plus précisément les composants présents sur chaque carte électronique, qui comprend des capteurs de mesure 29, pour mesurer la température, la tension, et le courant, un ou plusieurs circuits de traitement 130 pour estimer le niveau de charge de chaque cellule par exemple, déterminer la pertinence d'utiliser ou non chaque cellule, etc. La carte électronique 20 comprend de plus un circuit de commande 127 permettant l'actionnement des différents transistors formant les interrupteurs 113, 114. Enfin, elle comprend une interface de communication en liaison avec le dispositif de communication afin de communiquer avec le calculateur central 122.

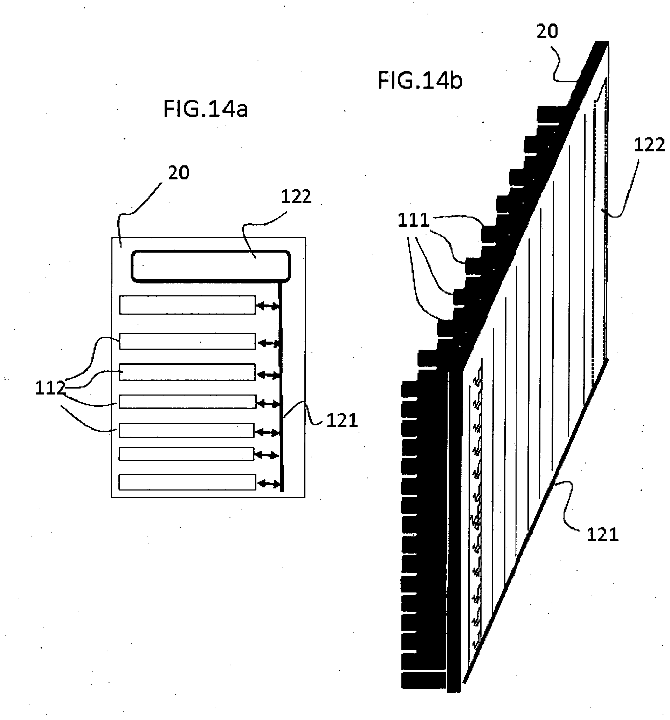

Les figures 14a et 14b illustrent une variante de réalisation dans laquelle les fonctions électroniques de chaque carte électronique du mode de réalisation décrit ci-dessus sont regroupées sur une seule carte électronique 20, sur laquelle les briques sont disposées. La figure 14a représente une vue de dessus, permettant de voir la répartition des modules 112 sur la carte 20, alors que la figure 14b représente une vue en perspective arrière, permettant de distinguer différentes cellules 111, ainsi que certains composants électroniques, représentés sommairement de manière non exhaustive pour simplifier la représentation de la carte électronique 20. Toutefois, cette dernière comprend tous les composants explicités précédemment. Le bus de communication 121 s'étend sur toute la longueur de la carte jusqu'au calculateur central 122, positionné vers une extrémité libre de la carte électronique 20. Ce bus de communication 121 peut être isolé physiquement de l'électronique des modules en établissant une bande de circuit imprimé dédiée au bus de communication, séparée des composants électronique des différents modules, en séparant par exemple leurs masses, et/ou en gardant une distance de sécurité entre les deux parties. Seuls les éléments de communication entre ces deux parties, comme des transformateurs ou des opto-coupleurs, resteront à cheval sur ces deux parties pour assurer la communication tout en garantissant l'isolation galvanique.

Selon une seconde variante de réalisation non représentée, le procédé de gestion de la batterie est mis en œuvre localement uniquement, au niveau de chaque module, voire cellule. Cela présente l'avantage de permettre un pilotage plus réactif des différents interrupteurs, d'éviter l'obligation de prévoir une isolation galvanique entre les cartes électroniques 20 et un calculateur central 122 et un codage complexe des informations à transférer. Dans une telle réalisation, un capteur de température, un capteur de tension et un capteur de courant sont par exemple agencés au niveau de chaque cellule. Les mesures effectuées par ces trois capteurs sont transmises à un circuit de traitement via un multiplexeur par respectivement trois voies de communications, ou en variante par une même voie mutualisée. Le circuit de traitement reçoit ainsi ces données au niveau d'une entrée de communication effectuant une numérisation, de type « ADC input ». Selon une réalisation possible, le circuit de traitement peut être un microcontrôleur disposant d'un nombre d'entrée/sortie suffisant pour interroger l'ensemble des capteurs. Tous les transistors formant les interrupteurs Ki sont pilotés par un circuit de commande, sous les ordres d'un circuit de traitement.

En remarque, il est finalement possible de réaliser des modes de réalisation avec différents nombres de cartes électroniques 20, une carte pouvant contenir les circuits électroniques de l'invention pour un, deux, ou tout nombre de modules. De plus, il est aussi possible de prévoir d'autres modes de réalisation dans lesquels une partie seulement des composants électroniques présentés précédemment sont présents, sur une carte électronique ou pas, ou dans lesquels certains composants sont partagés entre cellules et/ou modules. Par exemple, un circuit de commande d'interrupteurs peut être partagé par plusieurs modules voisins, de sorte de conserver une alimentation de tension acceptable.

Dans tous les cas, les cartes électroniques 20 sont avantageusement disposées de sorte de disposer leurs bornes de connexion avec les cellules 111 au plus proche des bornes des cellules de façon à réduire au maximum la longueur des connexions et donc les pertes associées. De même, sur le circuit imprimé de la carte électronique, les chemins de puissance sont les plus courts possibles avec une section de conducteur la plus élevée possible.

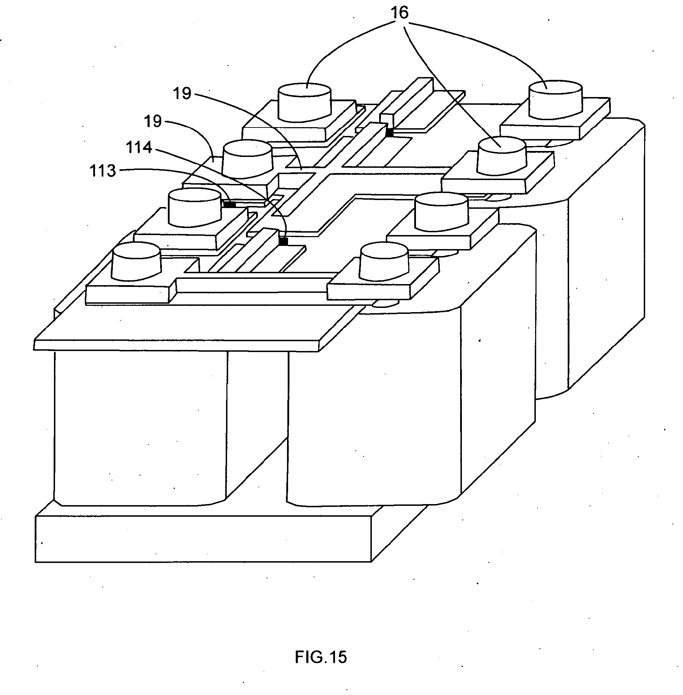

Pour augmenter la section de conducteur, il est possible de renforcer les pistes du circuit imprimé en soudant par-dessus une baguette ou fil conducteur. La figure 15 illustre une telle solution, sur laquelle une carte électronique 20 de type circuit imprimé est superposé sur un module de plusieurs cellules 111. Sur cette figure, seulement deux modules de deux cellules sont représentés, pour une raison de clarté de la figure, mais la batterie comprend plus de deux modules ayant chacun plus de deux cellules. En remarque, un tel renforcement peut remplir la seconde fonction d'évacuation de la chaleur générée, notamment celle dissipée par les transistors de puissance ; pour cela, sa forme peut présenter une surface favorisant cette fonction, à la manière d'un convecteur ou radiateur. Des connecteurs 16 sont aménagés sur cette plaque, afin de relier électriquement les cellules à l'électronique de la carte (par exemple des cellules dont les bornes positives et négatives traversent la carte et serrent la carte et les pistes de puissance renforcées via un écrou qui se visse sur les bornes de la cellule. Une rondelle relativement élastique peut être rajoutée entre la carte et l'écrou pour compenser des effets de dilatation thermique et assurer un bon contact électrique dans la durée. En variante, une simple soudure peut assurer le contact électrique entre les bornes de la cellule et les pistes de puissance de la carte PCB). Comme cela apparaît sur la figure, des renforts conducteurs électriques 19 sont ajoutés aux pistes du circuit imprimé. Ces renforts représentent aussi un potentiel radiateur thermique soudé et/ou collé sur les pistes. En complément, des trous, non représentés, peuvent être réalisés au travers la carte électronique 20 pour faciliter la circulation d'air et le refroidissement des cellules 111 et des composants électroniques.

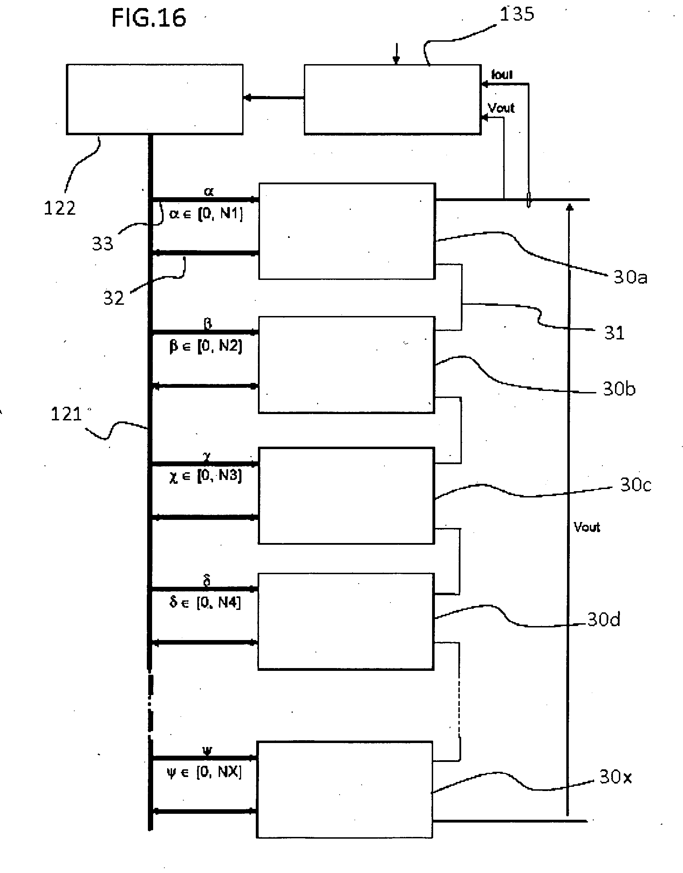

La figure 16 illustre une implémentation possible d'une batterie d'architecture telle que présentée précédemment, dans laquelle la batterie comprend plusieurs modules 30a à 30x, comprenant chacun respectivement N1 à Nx cellules commutables en série, ou en parallèle, ou partiellement en série et parallèle via un assemblage de briques 120 comme cela a été décrit précédemment, à l'aide d'un éventuel pont en H, reliées entre eux en série par des liaisons 31, pour fournir une tension de sortie Vₒᵤₜ. Chaque module est relié à un calculateur central 122 par un bus de communication 121, avec lequel il échange des données par des liaisons de communication 32 et reçoit en retour des commandes 33 du calculateur. Ces commandes comprennent notamment le nombre de cellules α à ψ à placer en série respectivement pour chaque module, ou éventuellement la configuration exacte de toutes les briques de chaque module, parmi les combinaisons série et parallèle possibles. Dans le cas où le module reçoit juste le nombre de cellules à mettre en série (tension nulle, simple, double, triple, quadruple...avec éventuellement le signe en présence d'un pont en H dans les modules), il définit les cellules à mettre en série et en parallèle en fonction de leur état de charge, santé ou autres critères, et du courant demandé pour atteindre la tension demandée. Cela permet d'obtenir la tension de sortie Vₒᵤₜ et le courant de sortie Iₒᵤₜ souhaités. Les valeurs électriques de sortie sont mesurées par une unité de contrôle 135, qui transmet ces mesures au calculateur central 122, qui met ainsi en œuvre une régulation de la batterie pour atteindre les valeurs exigées en sortie de la batterie.

Selon une réalisation intéressante, ces différentes parties de la batterie sont basées sur des technologies électrochimique différentes, c'est à dire comprennent des batteries élémentaires de différentes natures chimiques, pour pouvoir apporter une souplesse complémentaire dans la gestion de la batterie, et profiter des avantages de chaque technologie électrochimique en fonction de la situation et de l'environnement de la batterie. Chaque partie offre ainsi des niveaux de tension différents, ce qui multiplie les combinaisons possibles et permet une optimisation accrue de la batterie, qui s'adapte avec souplesse à tous les cas d'utilisation.

La structure ainsi décrite d'une batterie est de type modulaire, et permet une implémentation physique sous la forme de différents boîtiers indépendants et amovibles qui peuvent être connectés les uns avec les autres, par l'intermédiaire d'un bus de communication et d'un bus de puissance, dans un bâti ou rack adapté. Chaque boîtier peut comprendre une sous-partie quelconque de la batterie, qui peut aller d'un module à plusieurs modules.

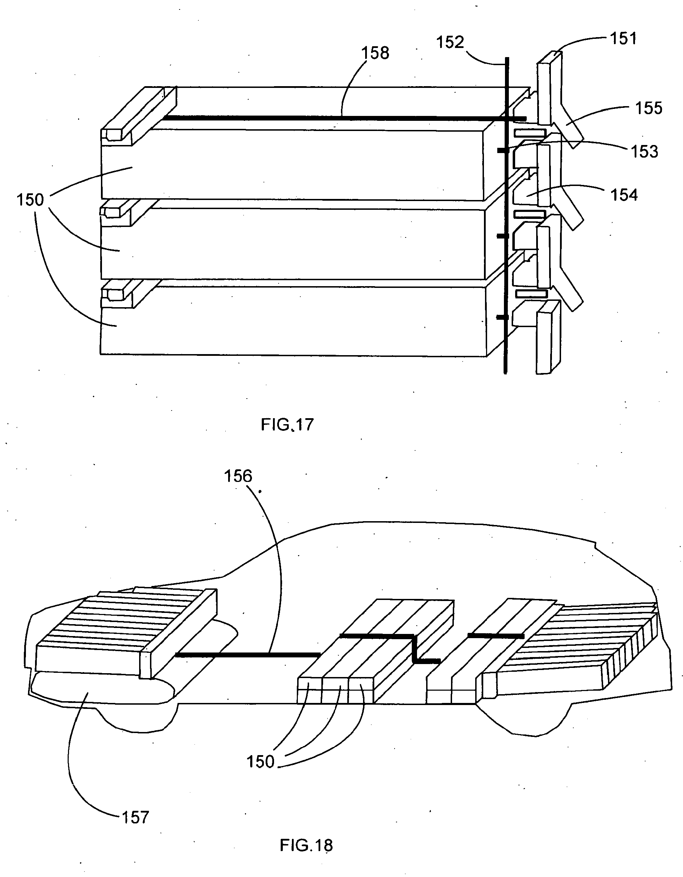

La figure 17 illustre une telle approche dans laquelle les différents boîtiers 150 sont disposés dans une architecture modulaire de type rack. Chaque boîtier est fixé sous forme de tiroir indépendant et maintenu par un dispositif de verrouillage/déverrouillage. Dans leur position fixée, les boîtiers sont reliés à un bus de communication 152 par l'intermédiaire d'un connecteur 153, de manière hautement isolée galvaniquement, et à un bus de puissance 151 par un connecteur de puissance 154 qui leur permet une liaison série avec les boîtiers adjacents. Le dispositif de verrouillage/déverrouillage 158 est associé à un système d'interrupteur permettant de couper automatiquement les connexions au bus de communication et au bus de puissance lorsqu'il est actionné pour retirer un boîtier 150. La connexion est remplacée par un court-circuit, via par exemple l'interrupteur mécanique ou électrique 155, lorsque le boîtier est retiré pour ne pas couper la connexion entre les boîtiers restants. Pour cela, un début de verrouillage ou déverrouillage par un actionnement d'un levier ou poignée du dispositif de verrouillage/déverrouillage est détecté et une information est transmise au système de gestion globale de la batterie, comme un calculateur central. En cas de déverrouillage d'un boîtier, le calculateur l'écarte aussitôt du fonctionnement global de la batterie et lui impose une tension nulle à ses bornes, ce qui assure la sécurité des manipulations futures et permet son stockage sécurisé. Les connexions avec les bus de puissance et de communication sont ensuite automatiquement coupées, par un interrupteur, de manière mécanique ou électrique. Les opérations précédentes sont effectuées de manière réversible en cas d'introduction d'un boîtier dans le bâti.

Cette construction présente l'avantage d'une gestion physique simplifiée de la batterie. Chaque sous-ensemble compris dans chaque boîtier est géré de manière indépendante ou semi-indépendante grâce à l'architecture décrite dans les modes de réalisation présentés précédemment. Il est ainsi possible de connaître précisément l'état de charge, l'état de santé comme le vieillissement, une éventuelle détérioration, la capacité en courant et tension de chaque boîtier, et de pouvoir intervenir sur un boîtier donné en cas de défaillance, pour changer un module voire une cellule, ou de pouvoir l'échanger si nécessaire, sans pénaliser l'ensemble de la batterie.

Cet assemblage physique peut ainsi être intégré dans un véhicule automobile comme illustré en figure 18, dans lequel les différents boîtiers sont répartis sur toute la longueur dans la partie inférieure du véhicule automobile, à titre d'exemple, liés entre eux par une liaison 156 incluant un bus de puissance 151 et un bus de communication 152, cet ensemble étant lié à un calculateur central 157.

Enfin, les exemples représentés comprennent peu de cellules pour une raison de clarté des figures. Toutefois, les réalisations envisagées sont adaptées pour la mise en œuvre de batteries aptes à fournir une tension de sortie importante, pouvant atteindre plusieurs centaines de volts, par exemple supérieure ou égale à 250 volts. Elles sont donc adaptées pour des batteries comprenant un nombre important de modules, notamment supérieur ou égal à 8.

L'invention porte aussi sur un procédé de gestion d'une batterie telle que décrite précédemment. Ce procédé comprend les étapes suivantes :
- détermination du nombre de cellules à disposer en série et/ou en parallèle dans les briques et/ou superbriques composant la batterie ;
- détermination de la position des interrupteurs de cellule et/ou de module et transmission d'une commande d'ouverture ou fermeture des interrupteurs en fonction de la détermination précédente.

Selon le mode de réalisation, le procédé de gestion de batterie comprend les actionnements suivants des interrupteurs d'une brique de la batterie :
- fermeture des interrupteurs disposés sur une branche verticale entre les bornes inférieure et supérieure d'une brique de la batterie, et ouverture d'un interrupteur disposé sur une branche transversale reliant respectivement les bornes intermédiaires disposées entre la cellule et un interrupteur de chacune des deux branches verticales, pour disposer les deux cellules de la brique en parallèle, ou
- ouverture des interrupteurs disposés sur une branche verticale entre les bornes inférieure et supérieure d'une brique de la batterie, et fermeture d'un interrupteur disposé sur une branche transversale reliant respectivement les bornes intermédiaires disposées entre la cellule et un interrupteur de chacune des deux branches verticales, pour disposer les deux cellules de la brique en série.

Avantageusement, le procédé de gestion de batterie selon comprend la mise en parallèle des deux cellules d'une brique lorsque le courant demandé en sortie de la batterie dépasse un certain seuil, et une mise en série des deux cellules de la brique lorsque la tension demandée en sortie de la batterie dépasse un certain seuil.

Le procédé de gestion de batterie peut aussi comprendre les actionnements suivants des interrupteurs d'une brique de la batterie :
- fermeture des interrupteurs disposés sur une branche verticale entre les bornes inférieure et supérieure d'une brique de la batterie et d'un interrupteur positionné sur la branche transversale et ouvertures d'interrupteurs de cellules, pour obtenir une différence de tension nulle entre les bornes supérieure et inférieure de la brique,
- fermeture des interrupteurs disposés sur une première branche verticale entre les bornes inférieure et supérieure d'une brique et ouverture d'au moins un autre interrupteur pour déconnecter la cellule de la seconde branche verticale de la brique et obtenir le fonctionnement de la brique avec uniquement la cellule de la première branche verticale.

Le procédé de gestion de batterie peut en outre comprendre l'étape d'alimentation électrique de tous les autres composants internes à la batterie nécessitant une alimentation par au moins une cellule de la batterie.

Le procédé de gestion de la batterie peut aussi comprendre les étapes suivantes :
- mesure d'au moins une grandeur au niveau d'une cellule de la batterie, représentative de l'état de la cellule ;
- transmission de la grandeur mesurée à au moins un calculateur ;
- détermination de la position des interrupteurs de cellule et/ou de module en prenant en compte la grandeur mesurée.

Le procédé de gestion de batterie permet ainsi de déterminer à chaque instant la position de plusieurs interrupteurs de cellules et/ou modules, et/ou d'inversion de tension de module, et/ou de liaison entre différentes briques, de façon à équilibrer chacun des modules de la batterie et d'aiguiller le courant au sein de chaque module pour équilibrer chacune des cellules des modules, tout en fournissant la tension et le courant souhaités en sortie de la batterie. Le procédé pourra notamment comprendre une étape intermédiaire consistant à diagnostiquer une défaillance et/ou un état à risque d'une cellule, en reconnaissant les cellules défectueuses, en surchauffe, etc., à partir de la grandeur mesurée au niveau d'une cellule, afin de déconnecter ou écarter du fonctionnement global de la batterie les cellules concernées.

Dans une batterie comprenant un nombre important de cellules et de modules, il est facile d'en écarter un nombre significatif, par exemple 10 % du nombre total de cellules, sans pénaliser l'utilisation de la batterie car le courant demandé est généralement inférieur au courant maximal disponible, utilisé uniquement dans une situation de crête de consommation. D'ailleurs, en cas de pic de consommation, il sera toujours possible de faire appel momentanément aux cellules écartées pour répondre au besoin plus important. Comme ces cellules resteront la plupart du temps inutilisées, elles ne mettront pas en danger la santé globale de la batterie. En remarque, tant que la tension de sortie reste inférieure ou égale à la moitié de la tension maximale que peut fournir en sortie la batterie, la configuration de la batterie peut faire en sorte de n'utiliser en série que la moitié ou moins des cellules disponibles et de placer au minimum les cellules en parallèle deux à deux. Dans une architecture telle que celle proposée en rapport avec les figures 4 ou 5, chaque module peut ainsi être librement configuré.

Dans tous les cas d'une tension demandée comprise entre la tension maximale que peut fournir la batterie (toutes les briques ou superbriques en configuration série) et la tension minimale qu'elle peut fournir (toutes les briques ou superbriques en configuration parallèle), le calculateur central détermine le nombre de briques ou superbriques à disposer en série et en parallèle, puis plus précisément à chaque instant la configuration individuelle de chaque brique ou superbrique, en fonction des différents critères explicités par la suite.

Un mécanisme impliquant le calculateur central en combinaison avec un circuit de traitement local 130, consistant en un calculateur par exemple, peut avantageusement être mis en œuvre. Dans cette solution, le choix de la configuration des briques et superbriques internes à un module est délégué au calculateur local du circuit de traitement 130 du module, en fonction du niveau de tension demandé par le calculateur central au module, parmi une tension nulle, simple, double, triple, etc., et éventuellement le signe associé à cette tension si le module est équipé d'un pont en H. Comme il peut exister plusieurs combinaisons pour faire apparaitre une même tension demandée aux bornes du module, le calculateur local du module choisit la configuration optimale parmi les différentes possibilités en fonction de l'état des cellules et du courant demandé (il cherchera par exemple à équilibrer l'état de charge des cellules qui composent le module ou à limiter le courant moyen dans une cellule en surchauffe). Ce calcul local permet de limiter la remontée d'information au calculateur central, ce qui serait nécessaire si ce dernier devait prendre des décisions précises et à chaque instant sur la position de chacun des transistors des briques et superbriques du module. Cette solution limite la complexité du calcul que le calculateur central doit effectuer, permet une réaction plus rapide d'un module à un changement brutal de situation (échauffement, pic de courant...), permet de n'avoir à transmettre du calculateur central vers le module que des ordres de commande simplifiés (une valeur entière comprise entre [0 et NX] ou [-NX, NX] en présence d'un pont en H au niveau du module, où NX le nombre maximale de cellules qui peuvent être mises en série dans le module considéré). Pour savoir quel (ou quels) module utiliser et avec quel niveau de tension, le calculateur central prend en compte le courant maximal que peut fournir chaque module en fonction de la tension demandée et de l'état de charge global de chaque module. Ces informations sont stockées au niveau du calculateur central et mises à jour via une transmission régulière d'informations, entrelacées avec les envois d'ordres de commande du calculateur vers les modules. Ces envois d'ordres sont prioritaires pour assurer le bon fonctionnement de la génération de la tension de sortie, qui évolue potentiellement beaucoup plus rapidement que l'état des cellules. De plus, les modules sont régulièrement informés par le calculateur central du courant actuellement débité et/ou du courant qui sera demandé à très court terme (par exemple le courant maximal qui sera demandé sur la prochaine demi-période). Cette information permet aux modules de savoir s'ils peuvent retirer certaines cellules du fonctionnement ou adopter certaines configurations sans risque de ne pouvoir satisfaire le courant actuel ou très prochain (par exemple, cela permet de gérer l'utilisation d'une cellule sous-chargée que l'on ne va utiliser que quand c'est vraiment utile, à savoir par exemple quand on a besoin de la pleine puissance lors d'une accélération d'un véhicule en sortie de péage).

Le procédé de gestion de la batterie peut mettre aussi en œuvre toute régulation autour d'une valeur de tension et/ou courant de sortie. Lorsque la tension de sortie est inférieure à la valeur de consigne, le nombre n de modules en série est augmenté, et au contraire si elle est supérieure à la valeur de consigne, alors ce nombre n est diminué. Pour éviter que le nombre n oscille entre deux valeurs pour atteindre une valeur de consigne non atteignable avec une valeur de n entière, un limiteur de fréquence de variation peut être utilisé et/ou un filtrage passe-bas au niveau du correcteur ou de la boucle de retour pour atteindre une régulation sur une valeur moyenne.

Si la batterie doit fournir une tension alternative, ou toute tension variable dans le temps selon une période donnée, la mise en parallèle de différentes parties de la batterie peut se décider sur des critères similaires, appliqués à l'amplitude de la sinusoïde ou de la tension variable à fournir, pour éviter de basculer d'un mode à un autre trop souvent, à chaque période. Globalement, le courant demandé pourra être d'autant plus élevé que l'amplitude de la tension demandée sera faible.

Ainsi, cette implémentation permet, à puissance sensiblement constante, de modifier les valeurs de courant et tension de sortie. Cette solution est parfaitement adaptée à l'alimentation de certains moteurs comme un moteur de véhicule automobile, qui peut nécessiter plus de couple à basse vitesse, et donc plus de courant d'alimentation, pour le franchissement d'une côte importante par exemple. Ainsi, l'invention porte aussi sur un véhicule automobile en tant que tel équipé d'une batterie telle que décrite, amovible ou non pour son échange rapide.

Le procédé de gestion de batterie comprend aussi une étape de diagnostic d'une cellule incluant une étape d'estimation de l'état d'une cellule, qui peut comprendre à titre d'exemple non limitatif une ou plusieurs mesures de courant, de tension, de température, de spectrométrie d'impédance ou autres au niveau d'au moins une cellule, tout ou partie des cellules de la batterie. Pour cela, la grandeur mesurée peut être comparée à des seuils prédéfinis. Le pilotage de chaque transistor de cellule dépend alors de cet état estimé de la cellule, et permet par exemple de déconnecter une cellule si elle fait apparaitre un courant ou une température anormale ou si elle fournie un courant inverse aux autres cellules, comme dans une situation de cellules voisines qui se déchargent au travers d'une cellule défaillante.

L'étape de diagnostic d'une cellule comprend notamment une étape d'estimation de la charge de la cellule et une estimation de son état de santé. De même, le pilotage de chaque transistor de cellule dépend de ces estimations. Il peut notamment être établi une comparaison de la charge estimée de la cellule avec un seuil de décharge et/ou un seuil de charge.

L'étape de diagnostic d'une cellule comprend par exemple une mesure d'impédance électrique complexe d'une cellule. Pour cela, la mesure du courant et de la tension au niveau de la cellule est effectuée lors d'un instant de passage de courant dans une cellule, par exemple lors d'une commande particulière de l'interrupteur série associé à la cellule, comme son ouverture ou sa fermeture, forcée ou non. La réponse à un bruit blanc, à un échelon ou à une impulsion permettent la mesure d'impédance complexe, de manière connue, ce qui permet d'en déduire des informations sur l'état de charge ou de santé de la cellule.

L'étape de diagnostic d'une cellule selon une réalisation de l'invention comprend aussi une mesure du courant au sein d'une cellule par l'intermédiaire d'un transformateur de courant. L'idée est d'augmenter la fréquence du courant pour faciliter la mesure, notamment dans le cas de courants continus, sans utiliser de captateurs de courant continu. Pour augmenter cette fréquence, une première solution consiste à alterner les cellules utilisées au niveau des modules et à alterner les modules utilisés pour générer la tension de sortie de la batterie. Une seconde solution consiste à connecter et déconnecter rapidement la cellule au moment où on mesure son courant. Ces solutions mettent finalement en œuvre un hachage de courant au niveau d'une cellule, ce qui permet de favoriser la mesure de ce courant. Il suffit alors d'utiliser comme capteur de courant un simple transformateur de courant, qui peut être positionné sur la carte électronique comprenant les différents composants électroniques mentionnés décrits dans les modes de réalisation illustrés.

L'étape de diagnostic d'une cellule comprend aussi l'estimation de l'état de charge de la cellule. Pour cela, une première solution repose sur la mesure de la tension de sortie de la cellule. Une autre solution consiste à intégrer le courant à partir de l'état déchargé pour connaître le nombre d'ampères-heures accumulés, puis le taux de charge par son rapport avec la capacité de la cellule. Cette dernière solution nécessite une calibration régulière par des opérations de charge et décharge complète pour compenser les dérives liées à l'intégration du courant et remettre à jour la capacité de la cellule au fur et à mesure de son vieillissement. Cette calibration peut être réalisée sur une ou plusieurs cellules pendant que les autres fonctionnent normalement, ce qui présente l'avantage de ne pas nécessiter l'arrêt complet de la batterie. Pour conserver l'équilibrage de l'état de santé des cellules de la batterie, toutes les cellules subissent sensiblement le même nombre de calibrations.

D'autre part, le procédé de gestion de batterie peut mettre en œuvre une modification cyclique de l'utilisation des cellules, de sorte que tout ou partie des cellules de la batterie passent d'un état de fonctionnement normal à un état déconnecté et réciproquement, selon un rapport cyclique déterminé qui peut être fixe ou variable. Ce rapport cyclique permet de fixer la proportion du temps d'utilisation de chaque cellule de la batterie et de faire en sorte par exemple que la proportion du temps d'utilisation des cellules défectueuses ou en surchauffe soit plus faible que celle des cellules sans surchauffe. Un tel cycle peut être utilisé pour tout ou partie des cellules, même pour des cellules saines, en fonction du besoin global en courant et tension. Les cycles de fonctionnement des différentes cellules peuvent être décalés dans le temps pour obtenir à chaque instant un nombre sensiblement équivalent de cellules actives par exemple, en garantissant à chaque instant un nombre suffisant de cellules actives pour satisfaire le courant demandé.

Ainsi, le procédé de gestion de batterie met en œuvre les étapes suivantes :
- équilibrage des modules et/ou cellules entre eux, en utilisant en priorité les modules et/ou cellules les plus chargés lorsque la batterie est connectée à une charge et les modules et/ou cellules les moins chargés lors de la recharge de la batterie ;
- équilibrage des modules et/ou cellules en modifiant le taux moyen d'utilisation des modules et/ou cellules, mais sans utiliser les mêmes modules et/ou cellules en permanence, de sorte que la charge des modules et/ou cellules s'équilibre. En effet, si par exemple un module est très chargé par rapport aux autres modules et qu'il est utilisé en permanence afin que sa charge atteigne au plus vite la charge des autres modules, il risque de surchauffer. L'équilibrage est de préférence réalisé en permanence durant la charge ou l'utilisation de la batterie, et il n'est ainsi pas nécessaire de solliciter fortement un module pour arriver rapidement à l'équilibre. En modifiant simplement le taux moyen d'utilisation d'un tel module de quelques pourcentages par rapport aux autres modules, on peut assurer l'équilibrage de la charge des modules sans trop déséquilibrer le stress et l'échauffement des modules du pack batterie. Cet équilibrage s'applique de la même manière pour les cellules, d'un même module ou non ;
- les modules sont choisis en fonction du courant qu'ils peuvent fournir, et sollicités quant ils sont aptes à fournir un courant supérieur ou égal au courant demandé. Dans les phases où le courant demandé est plus faible, on utilise les modules dont la capacité à fournir du courant est plus faible ;
- limitation de l'utilisation des modules et/ou cellules dont la température est la plus élevée ou utilisation de manière préférentielle, lorsque le courant demandé est plus faible. De manière générique, il est évité que la température d'un module et/ou cellule dépasse un seuil ; ce risque de dépassement est anticipé. De manière optimale, la température au sein de la batterie est maintenue relativement homogène pour homogénéiser le vieillissement des cellules et augmenter leur durabilité.

En variante, d'autres stratégies sont imaginables et le procédé de gestion de la batterie peut par exemple comprendre les étapes suivantes :
- utilisation en priorité d'une partie de la batterie pour n'avoir à changer que cette partie de la batterie au premier changement nécessaire. Il est possible d'imaginer qu'une partie de la batterie soit plus facilement interchangeable ;
- utilisation selon un taux plus élevé des cellules optimisées pour résister à une utilisation intensive et limitation de la sollicitation du reste de la batterie, qui peut être optimisé pour apporter plutôt de la capacité énergétique. De manière plus générique, dans le cas d'une batterie hétérogène en technologie de cellule, c'est-à-dire réunissant des cellules de nature différente, il peut être intéressant d'avoir une hétérogénéité dans l'utilisation pour optimiser la performance globale en tenant compte des avantages de chaque cellule.

En remarque, le procédé de gestion de la batterie met en œuvre une étape de hachage d'un courant de charge et/ou décharge d'une ou plusieurs cellules, dans le but de ralentir son vieillissement. Ce hachage est facilement réalisable en connectant et déconnectant les cellules selon un certain rapport cyclique ou en alternant l'activation des modules, tout en assurant le bon niveau de tension sur la sortie de la batterie. Le hachage du courant permet d'atteindre des courants « crête » plus élevés, ce qui se traduit au sein d'une cellule par une tension maximale plus élevée que la tension normale, ce qui favorise alors la migration des ions dans la cellule et réduit sa perte de capacité de stockage.

Finalement, le procédé de diagnostic de la batterie comprend plus généralement une étape de mesure d'au moins une grandeur caractéristique de l'état d'une cellule, comme une tension, un courant, une température, un nombre d'ampères par heure, voire toute autre grandeur significative, puis une étape de décision sur l'état de l'interrupteur de la cellule et/ou module associé en tenant compte de cette mesure. Comme cela a été explicité ci-dessus, cette décision peut amener une action consistant en l'ouverture totale d'un interrupteur de cellule ou la fermeture de l'interrupteur de module associé pour déconnecter une cellule du reste de la batterie en cas de défaillance de la cellule, ou de manière intermédiaire en une alternance d'ouverture et/ou fermeture selon un rapport cyclique optimal pour maintenir la cellule dans un état acceptable. Ainsi, selon un mode de réalisation, plusieurs seuils peuvent être prédéfinis pour une certaine grandeur mesurée, afin de déterminer des actions différentes selon le seuil atteint. Les actions engagées suite à la mesure d'une grandeur liée à une cellule donnée seront déterminées de sorte de minimiser les opérations d'ouverture et fermeture d'interrupteurs, pour éviter leur commutation trop fréquente consommatrice de puissance, éviter leur commutation intempestive, et maîtriser la synchronisation des commutations d'interrupteur entre les différentes cellules de la batterie.

Le procédé de gestion de la batterie décrit ci-dessus peut être mis en œuvre par un calculateur local et/ou distant, comme cela a été explicité auparavant. Ce calculateur peut comprendre un ou plusieurs microprocesseurs.

En remarque, la mise en œuvre du procédé localement, sans recours à un calculateur central, présente les avantages suivants :
- comme la ou les mesures et leur analyse sont faites localement et indépendamment des autres modules, la réaction peut être très rapide. Elle est plus rapide que la réalisation avec un calculateur central qui nécessiterait une communication par une liaison avec isolation galvanique, avec d'abord un codage série qui induirait un premier délai, puis le transfert par un bus dont le débit réduit impliquerait un second délai ;
- dans le cas où un module comprend son propre calculateur, un traitement poussé des mesures peut être fait, pour atteindre ainsi un diagnostic précis de chaque cellule, son état de santé et son état de charge.

D'autre part, le procédé de gestion de la batterie met aussi en œuvre une étape supplémentaire de déconnexion de toutes les cellules possibles lors d'un arrêt prolongé d'utilisation de la batterie. Cette étape apporte une sécurité importante notamment dans les situations particulières comme suite à un accident ou à un incendie. Lorsqu'un nombre important de cellules sont déconnectées, et de préférence toutes les cellules, le risque d'obtenir un court-circuit important entre les cellules, même en cas d'incident important, reste très faible. Par ailleurs, l'isolation des cellules à l'arrêt évite que les cellules se déchargent au travers de certaines cellules au plus gros courant de fuite ou présentant des défauts.

Selon un mode de réalisation avantageux, le procédé de gestion de l'invention comprend une commande d'interrupteurs de cellules et/ou de modules afin d'obtenir une tension de sortie de valeur prédéfinie, et/ou une tension de sortie alternative selon une consigne prédéfinie. De manière similaire, le procédé de gestion de l'invention comprend une commande d'interrupteurs de cellules et/ou de modules dans une phase de charge de sorte d'obtenir une tension et/ou un courant de charge prédéfinis dans chaque cellule à charger.

Ainsi, le procédé de gestion de batterie permet aussi une adaptation de la tension de sortie selon l'utilisation souhaitée, par exemple au besoin d'une charge électrique. Cette adaptation comprend par exemple le choix de la configuration des différentes briques formant les différents modules, pour choisir notamment la configuration appropriée entre les possibilités de liaison série ou parallèle des différentes cellules, permettant d'atteindre une tension de sortie plus ou moins élevée, un courant de sortie plus ou moins faible. Il peut aussi être choisi un certain nombre de modules à utiliser en série, ou en parallèle, ainsi qu'un choix de modules restant inutilisés, notamment quand la tension totale nécessaire est inférieure à la tension maximale que peut délivrer la batterie. Dans ce choix, il est possible de laisser de côté les modules les plus déchargés pour privilégier les modules les plus chargés et/ou de laisser inutilisés les modules présentant des défaillances, tel qu'explicité précédemment. En complément, le procédé peut aussi intervenir au niveau des cellules elles-mêmes, la tension souhaitée peut être obtenue en déconnectant certaines cellules choisies de certains modules choisis, en privilégiant par exemple l'utilisation des cellules les plus chargées.

L'adaptation de la tension de sortie de la batterie de l'invention peut même prendre des formes complexes. En effet, elle est adaptée pour fournir une tension de sortie sinusoïdale pour un moteur synchrone ou asynchrone d'un véhicule automobile. La figure 19 représente un exemple de régulation d'une batterie pour obtenir une telle sortie de tension, mise en œuvre par exemple au sein du calculateur central 122 décrit précédemment dans les modes de réalisation. Cette régulation repose sur un bloc 80 de calcul d'une valeur de consigne des paramètres électriques souhaités en sortie de la batterie, comprenant la tension de consigne V_{cons} et le courant de consigne I_{cons}, en fonction de la prise en compte d'une éventuelle demande d'un conducteur du véhicule automobile dans un bloc 81, transmise par l'intermédiaire de la pédale d'accélération notamment, et en fonction des valeurs de fonctionnement du moteur du véhicule automobile, comme la vitesse Vit et le couple Cou, transmises par un bloc 82. En remarque, la consigne peut consister en une combinaison de ces valeurs de courant et de tension, comme par exemple leur produit I_{cons} x V_{cons}. Le bloc 80 de détermination d'au moins une valeur de consigne peut reposer sur une commande vectorielle, prenant en compte le réglage de l'amplitude, de la fréquence et éventuellement de la phase du paramètre courant/tension selon le type de moteur à alimenter. Naturellement, ce principe fonctionne aussi avec des situations plus simples, comme un besoin d'une tension continue. Ensuite, le bloc de régulation comprend un bloc 83 de correction, à partir de la différence entre les valeurs de consigne I_{cons}, V_{cons} et les valeurs réelles correspondantes I_{réel}, V_{réel}, qui transmet un besoin à un bloc 84 qui détermine la configuration série ou parallèle des briques, le nombre de modules nécessaires dans la batterie et éventuellement les cellules particulières de ces modules à utiliser. Selon une réalisation préférée, un choix des cellules à utiliser dans les modules se fait au niveau des modules sur la base des paramètres mesurés localement. Pour cela, ce bloc 84 reçoit aussi les informations de mesure de grandeurs effectuées au niveau des modules et des cellules de la batterie, et notamment l'état de charge SoC et l'état de santé SoH des cellules ou modules. Enfin, un dernier bloc 85 met en œuvre le choix déterminé par le bloc 84, et envoie notamment les commandes nécessaires aux différents interrupteurs de la batterie. Il en résulte en sortie les valeurs réelles du courant I_{réel} et de la tension V_{réel}, qui sont reçues par le moteur du véhicule automobile, qui permet d'atteindre les valeurs de fonctionnement, comme une vitesse Vit et un couple Cou transmises par le bloc 82. Enfin, un limiteur de fréquence de variation et/ou un filtrage passe-bas peut agir sur le bloc 83 de correction, ou sur la boucle de retour, pour obtenir une valeur moyenne convenable, en limitant les fréquences de commutation des cellules, comme par exemple selon une fréquence de 200 kHz pour une tension de sortie de fréquence 500 Hz.

Cette fonctionnalité de régulation de la tension de sortie de la batterie lui permet de se comporter comme une structure de conversion de type batteries commutées, qui évite l'utilisation d'un convertisseur DC/DC en sortie du pack batterie, pour ajuster la tension aux besoins de l'application, en simplifiant ainsi le schéma de la figure 3 de l'état de la technique.

La figure 20 représente un exemple d'onde de tension qui peut être fournie par la batterie via un pilotage tel qu'explicité ci-dessus, pour une consigne en tension de type sinusoïde à 100 Hz, d'amplitude crête de 40 V et centrée sur 40 V, et pour une batterie constitué de 20 modules de 4 volts chacun et dont la fréquence de commutation est limitée à 10 kHz (soit 100 commutations par période).

Pour pouvoir générer une tension monophasée centrée sur 0, les interrupteurs permettant d'inverser la tension (de type pont en H) aux bornes des modules et donc de la batterie seront utilisés.

D'autre part, le principe de fonctionnement précédent s'applique aussi de manière similaire dans une phase de recharge de la batterie, qui permet à la batterie de se recharger directement par sa connexion sur le réseau électrique standard. Plus précisément, lors d'une recharge de la batterie, cette dernière est reliée à une source de tension, et comme les cellules et les transistors représentent une résistance interne, la circulation d'un courant dans la batterie engendre une chute de tension résistive, qui correspond à la différence entre la tension imposée par la source et celle à vide obtenue par les différents modules en série de la batterie. Le fait de pouvoir réguler cette différence permet de gérer le courant de charge de la batterie. Ainsi, la batterie met aussi en œuvre un procédé de charge, qui comprend une étape d'ouverture et/ou fermeture d'interrupteurs pour obtenir un courant de charge souhaité au niveau de cellules choisies. Une régulation similaire à celle explicitée précédemment peut être mise en œuvre, permettant de déterminer le nombre de modules à placer en série, et la tension que doit fournir en sortie chacun de ces modules (configuration parallèle, série ou combiné des briques et superbriques des modules) et lesquels, pour obtenir une consigne de courant de recharge au sein de la batterie. De même qu'explicité précédemment, ce procédé comprend une étape de choix des cellules à recharger, tenant compte notamment de leur état de charge et de leur état de santé. En remarque, une inductance peut être placée entre la source et la batterie pour lisser le courant qui circule entre les deux. Cette remarque s'applique de manière similaire entre la batterie et une charge. Ainsi, la batterie permet une recharge sur le réseau électrique de manière simplifiée, sans nécessiter de convertisseur électrique de type tension/courant.

En remarque, si la batterie ne permet pas de générer ou absorber une tension négative, elle peut néanmoins accepter une recharge sur le réseau sans nécessiter de convertisseur électrique/électrique de type tension/courant, en utilisant un pont redresseur, intercalé entre le secteur et la batterie, pour obtenir une tension positive U au niveau de la batterie.

Finalement, la solution décrite précédemment présente de nombreux avantages parmi lesquels :
- elle repose sur une multitude d'interrupteurs élémentaires, c'est-à-dire une multitude de transistors selon le mode de réalisation préféré, éloignés les uns des autres, ce qui permet facilement d'évacuer l'énergie dissipée par leur fonctionnement, puisque cette énergie dissipée se présente sous la forme d'une multitude de petites quantités d'énergie éparpillées dans la structure de la batterie ;
- elle permet d'effectuer un équilibrage en temps réel des cellules de la batterie via un aiguillage dynamique du courant ;
- elle permet d'effectuer un équilibrage en temps réel des modules de la batterie via une optimisation des taux d'utilisation de chacun d'eux ;
- elle permet de déconnecter les cellules défaillantes ;
- elle permet de limiter le courant dans les cellules dont la température devient trop élevée via une déconnexion de la cellule, totalement ou selon un rapport cyclique permettant d'atteindre un courant moyen acceptable par la cellule ;
- elle permet d'ajuster la tension de sortie de la batterie de manière douce (commutation basse fréquence < 1000 Hz et avec des paliers en tension peu élevés, par exemple 4V), sans nécessiter de hachage haute fréquence de la pleine tension de la batterie. Elle permet d'ajuster une tension continue souhaitée pour le pilotage de moteurs à courant continu ou pour la recharge sur une source continue. Elle permet aussi de générer une tension alternative pour le pilotage de moteurs synchrones ou asynchrones, etc., ou pour une recharge directe sur le réseau électrique ;
- elle permet d'isoler individuellement une cellule d'un module, en permettant notamment de mesurer sa tension à vide même si la batterie est en fonctionnement ;
- elle permet d'isoler toutes les cellules, par exemple à l'arrêt du véhicule ou suite à la détection d'une défaillance majeure, permettant d'écarter tous risques électriques pour l'utilisateur ou les personnes qui seront amenées à intervenir, par exemple les pompiers en cas d'incendie.

En mesurant à la fois la tension des cellules et la tension d'un module de la batterie, il est possible d'en déduire les tensions aux bornes des transistors de puissance. A partir de ces tensions et du courant traversant les cellules ou transistors de modules, il est possible, dans certaines configurations, de détecter si un transistor est défaillant. Ainsi, la batterie met aussi en œuvre un procédé de diagnostic du fonctionnement de tout ou partie des transistors qui remplissent les fonctions essentielles d'interrupteurs, qui peut comprendre tout ou partie des étapes suivantes :
- si lors de l'application d'une certaine configuration des transistors dans le module, la tension de module est significativement inférieure à la tension prévue, c'est qu'un transistor de shunt ou de mise en parallèle ne s'ouvre plus correctement ;
- si lors de l'application d'une certaine configuration des transistors dans le module, la tension de module est significativement supérieure à la tension prévue, c'est qu'un transistor de mise en série ne s'ouvre plus correctement ;
- si une tension apparait au borne d'un transistor alors qu'il est sensé être fermé, c'est que soit il ne se ferme plus correctement, soit que le courant est anormalement élevé et qu'un transistor voisin ne s'ouvre plus correctement ;
- si le courant dans une cellule n'est pas nul alors que la cellule est sensée être déconnectée, c'est qu'un des transistors de cellule ne s'ouvre pas.
- si la tension sur chaque branche de l'éventuelle pont en H ne correspond pas à la tension prévue, c'est que soit un des transistors de la branche ne se ferme plus, soit qu'au contraire il ne s'ouvre plus.

Naturellement, l'invention ne se limite pas aux exemples précédents. Notamment, plusieurs capteurs de mesure par cellule ont été implémentés mais en variante d'autres nombres de capteurs de mesure peuvent être choisis. De plus, il est possible d'utiliser d'autres types de capteurs de mesure que ceux décrits, pour mesurer d'autres grandeurs caractéristiques de l'état d'une cellule que la tension, le courant ou la température. Chaque cellule peut présenter toute forme et être basée sur n'importe quelle technologie de stockage d'énergie, sans limitation au Lithium-Ion présenté plus en détail dans un mode de réalisation de l'invention.

Dans le cas d'utilisation d'un capteur de courant par cellule par exemple, ce capteur peut aisément être calibré via un capteur de courant de référence situé au niveau du chemin de puissance et interrogé par le calculateur central. Ce dernier distribue alors la valeur mesurée à l'ensemble des modules via le bus de communication et chaque module est alors à même de vérifier que la somme des courants traversant les cellules placées en parallèle dans le module correspond à ce courant global et si une erreur apparait, d'établir une loi de correction des valeurs mesurées sur chacune cellule. Cette calibration parait notamment évidente lorsque les cellules se trouvent dans une configuration dans laquelle elles sont toutes en série, puisque le même courant traverse chacune des cellules et correspond au courant du chemin de puissance (au signe près dans le cas d'utilisation d'un pont en H au niveau du module). Cette calibration, qui peut se faire très régulièrement, permet d'utiliser potentiellement des capteurs très bas coût au niveau de chaque cellule (mal calibrés au départ et présentant des dérives en température et avec le temps). On peut potentiellement par exemple utiliser la chute de tension aux bornes des transistors de cellule lorsqu'ils sont fermés pour estimer le courant qui les traverse et donc le courant qui passe dans les cellules auxquelles il est rattaché.

De plus, les modes de réalisation précédents ont été décrits en implémentant une certaine brique dans un module de la batterie. Toutefois, il serait possible d'obtenir une amélioration d'une batterie en ne gérant qu'une partie de ses modules selon le concept de l'invention, et donc en ne disposant des interrupteurs de cellule et des cellules pour former des briques ou superbriques que sur une partie de la batterie. Certains modules pourraient ne pas implémenter l'approche décrite précédemment et il est possible d'imaginer une batterie associant des modules conventionnels et des modules améliorés selon l'invention. De plus, les différentes briques et/ou superbriques décrites précédemment pourraient aussi être combinées pour former d'autres architectures de batterie.

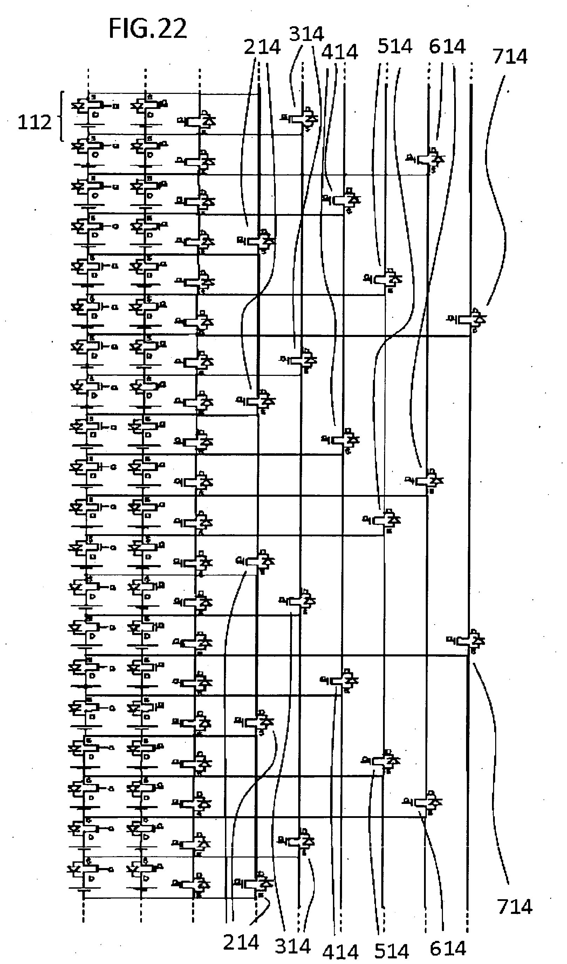

Les figures 22 à 24 illustrent des variantes de réalisation de mise en œuvre d'une fonction de shunt de plusieurs modules d'une batterie, qui repose sur des interrupteurs complémentaires disposés en parallèle de plusieurs modules permettant de rajouter un chemin de passage du courant lorsque plusieurs modules sont désactivés, limitant ainsi les pertes. Sur ces figures, les briques sont représentées de manière partielle et incomplète pour simplifier la représentation, mais elles sont de la forme décrite précédemment. En remarque, si les modules présentent un pont inverseur en H en sortie, les interrupteurs complémentaires seront de préférence de type bidirectionnels en tension (ne présentant pas de diode inverse parallèle).

Ainsi, la figure 22 ajoute une première série d'interrupteurs 214 permettant chacun de shunter quatre modules consécutifs, une seconde série d'interrupteurs 314 permettant chacun de shunter six modules consécutifs, une troisième série d'interrupteurs 414 permettant chacun de shunter aussi six modules consécutifs mais décalés par rapport à la seconde série, une quatrième série d'interrupteurs 514 permettant chacun de shunter aussi six modules consécutifs mais décalés par rapport aux deux séries précédentes, une cinquième série d'interrupteurs 614 permettant chacun de shunter huit modules consécutifs et une sixième série d'interrupteurs 714 permettant chacun de shunter aussi huit modules consécutifs mais décalés par rapport à la cinquième série.

Tous les interrupteurs de ces différentes séries sont disposés entre les bornes inférieures et supérieures de modules différents, en parallèle les uns des autres. Naturellement, leur gestion est cohérente pour éviter de créer des situations de court-circuit, comme cela a été explicité sur les exemples précédents.

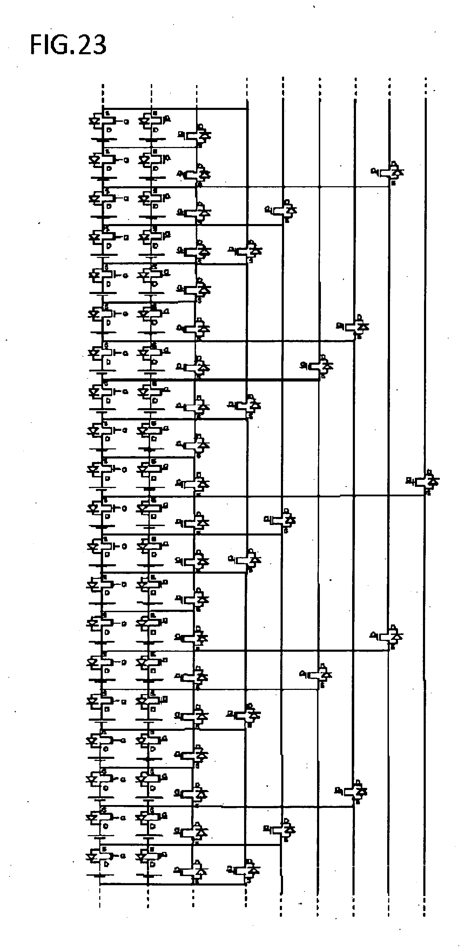

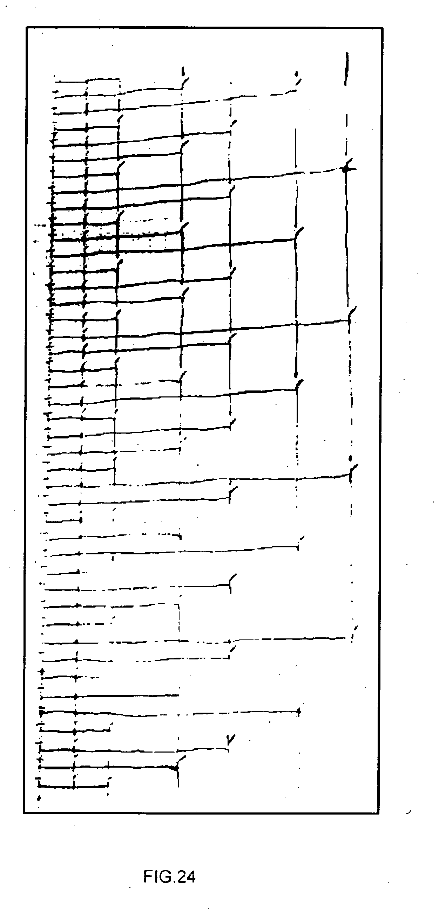

Les deux figures 23 et 24 illustrent deux autres variantes de réalisation selon la même approche.

L'avantage de ces différentes réalisation est d'ajouter des chemins de passages du courant beaucoup plus directes lors de la désactivation de plusieurs modules grâce à des interrupteurs qui shuntent plusieurs modules à la fois, ce qui génère alors beaucoup moins de pertes. Ainsi, à chaque instant, selon le nombre de modules nécessaires, une configuration sensiblement optimale est mise en œuvre pour minimiser la résistance totale de la batterie.

Les différents interrupteurs mentionnés précédemment dans tous les modes de réalisation ont été implémentés à l'aide de transistors. Des transistors NMOS ou PMOS ont été principalement représentés, mais il est toutefois possible d'utiliser des transistors bipolaires NPN et PNP, qui présentent l'avantage de pouvoir être commandés avec une tension assez faible, des transistors FET, JFET, IGBT, GaN, des relais, etc. En variante, tout autre type d'interrupteurs que ceux décrits pourrait être implémenté, comme des thyristors si le courant est naturellement amené à s'inverser au moment où on souhaite l'ouvrir.

La batterie de l'invention peut être gérée par une unité intelligente, un calculateur ou circuit de traitement local et/ou distant et accessible par un dispositif de communication local, ce calculateur pouvant comprendre tout élément logiciel (software) et/ou matériel (hardware) pour gérer la batterie, notamment déterminer la configuration de ses interrupteurs. Pour cela, la batterie peut intégrer tout moyen d'actionnement, tout circuit de commande, de ses interrupteurs.

De nombreuses autres variantes de réalisation de l'invention peuvent être facilement imaginées par une simple combinaison des modes de réalisation et/ou leurs variantes décrits précédemment.

En remarque, la communication au sein de la batterie et/ou vers une unité extérieure peut se faire selon un principe de courant porteur, dès lors que le courant demandé par une charge ou fourni par une source n'est pas trop important pour autoriser la déconnection de certaines cellules. En effet, ce principe repose sur une alternance volontaire de connexions et déconnexions de certaines cellules de la batterie, afin de créer une modulation de courant induit et une modulation de puissance au niveau d'un module, qui se propage à l'ensemble de la batterie et au-delà. Cette modulation de puissance est donc visible par les autres modules de la batterie et par une charge extérieure, ce qui permet de l'utiliser pour transmettre des informations selon n'importe quel protocole de communication, existant et normalisé ou non. Il peut par exemple être défini un circuit maître qui interroge tour à tour toutes les cellules, par leur adresse, chaque cellule répondant ensuite dans un créneau temporel dédié. Le maître peut par exemple demander une information comme une mesure de tension, courant et/ou température à une certaine cellule, puis cette dernière peut envoyer l'information demandée avec éventuellement un code permettant d'informer d'une éventuelle défaillance ou non. Ce principe permet ainsi à différentes cellules de la batterie de communiquer simplement entre elles, ou de communiquer vers un calculateur central ou un circuit de traitement de la batterie ou vers une unité extérieure. En remarque, la modulation de courant peut se faire sans déconnecter complètement une cellule, mais simplement en modulant la résistance à l'état passant du transistor de cellule, c'est-à-dire en modulant la tension de grille du transistor autour d'un point de polarisation. Cela évite que la cellule soit complètement déconnectée et surcharge trop les autres cellules du module qui prennent le relais sur la circulation du courant. Cette modulation de résistance à l'état passant peut aussi se faire sur le transistor de module lorsque celui-ci est activé. Cela permet alors de communiquer même si toutes les cellules sont désactivées par l'ouverture des transistors de cellule. La communication par courant porteur permet de moduler un courant important au niveau de l'étage sans pour autant engendrer de pertes électriques importantes. En effet, cette modulation de courant se fait en modulant une consommation de courant simplement stocké et déstocké puisqu'appartenant à une batterie, ce qui fait qu'il n'existe pas les pertes qui existent dans un élément dissipatif comme une résistance ou un transistor en mode linéaire utilisé classiquement pour un système de courant porteur.

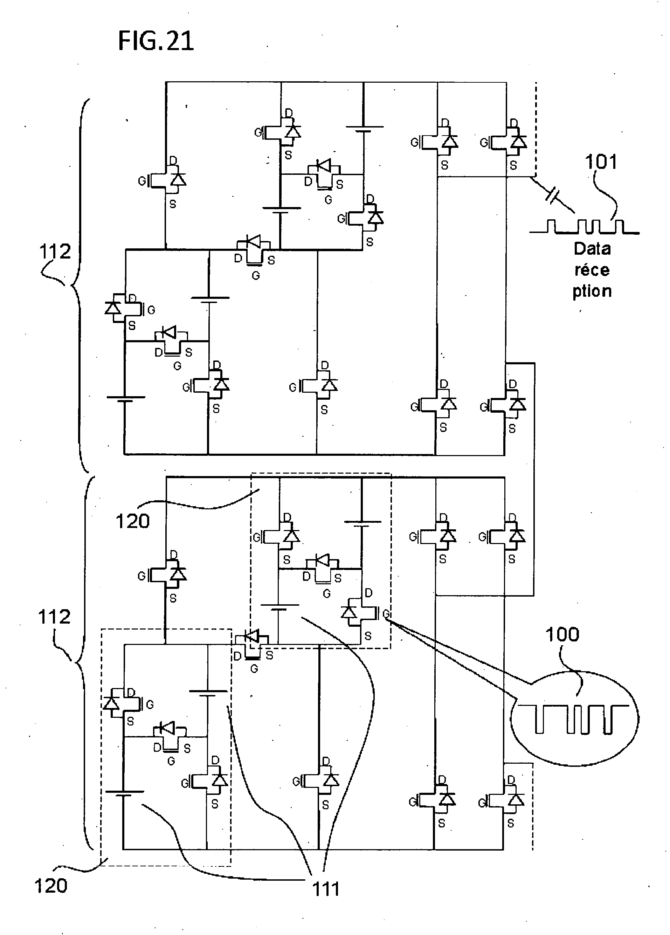

La figure 21 illustre ainsi schématiquement la mise en œuvre de principe, sur laquelle un premier module 112 d'une batterie génère un signal de communication 100 par l'actionnement d'au moins un interrupteur de cellule, alors qu'un signal correspondant 101 est ensuite reçu au niveau d'un second module 112 de la batterie.

L'invention a été décrite avec des modes de réalisation dans lesquels chaque étage ou module est composé de briques et/ou superbriques de cellules élémentaires, toutes comprenant des interrupteurs pilotés par un circuit de commande. En variante d'implémentation, plusieurs cellules élémentaires peuvent être regroupées pour former des cellules plus importantes ou groupements de cellules. Ensuite, l'architecture de l'invention s'applique sur ces groupements de cellules. Ainsi, l'invention intègre toute réalisation dans laquelle la cellule considérée comme une cellule élémentaire dans les modes de réalisation précédents correspond en fait à un groupement de cellules, qui peut se présenter comme un ensemble monolithique, dont la connectique est figée et non modifiable, se présentant même éventuellement dans un boîtier avec au moins deux bornes extérieures, dans un format et une utilisation finalement semblables à ceux d'une cellule élémentaire telle que définie précédemment. Il faut donc entendre par le terme « cellule » dans l'ensemble de la description toute entité d'éléments de stockage d'électricité, allant d'une cellule élémentaire, comme une batterie Lithium-Ion, à l'association d'une multitude de batteries élémentaires.

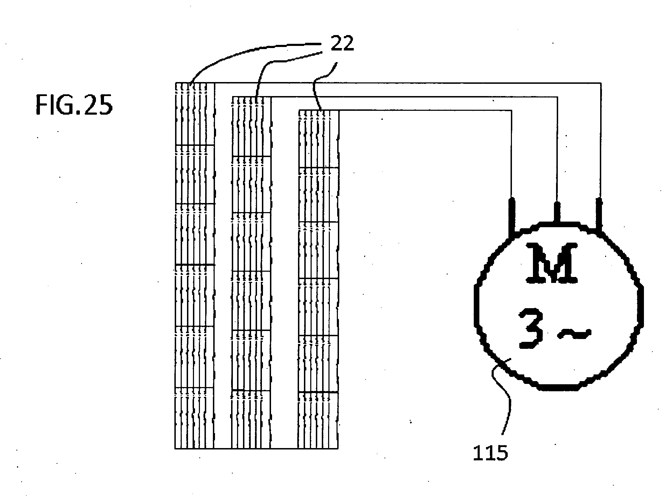

D'autre part, l'invention est aussi compatible avec une implémentation triphasée. La figure 25 illustre simplement une batterie comprenant trois colonnes 22 de stockage de puissance, chacune d'architecture similaire à une batterie selon l'invention telle que décrite précédemment, permettant d'alimenter un moteur triphasé 115.

De plus, l'architecture de la solution de batterie décrite précédemment permet la mise en œuvre d'autres fonctions intéressantes.

Une première fonction consiste en une mesure d'impédance électrique. Pour cela, il est possible de fermer et/ou ouvrir au moins un interrupteur de cellule 113 associé à une cellule 111, pour permettre ou pas à une partie du courant circulant dans le pack batterie, de passer par la cellule. En contrôlant les instants de passage du courant dans la cellule et en mesurant le courant et tension au niveau de la cellule, il est possible d'en déduire l'impédance électrique complexe de la cellule. Des méthodes classiques telles que la réponse à un bruit blanc, à un échelon ou à une impulsion sont bien connues pour identifier les caractéristiques électriques d'un élément électrique. Cette mesure d'impédance électrique complexe permet potentiellement de donner des informations supplémentaires par rapport aux mesures de courant, tension et température pour mieux estimer l'état de charge et de santé de la cellule.

Cette mesure d'impédance complexe sur la base d'une commande bien définie de l'interrupteur série est avantageusement effectuée pendant que les autres cellules de la brique et/ou du module prennent le relais du courant lorsque que l'interrupteur série est ouvert. En variante, il est aussi possible d'effectuer cette mesure sur la base du fonctionnement normal de la batterie, qui génère naturellement des échelons de courant dans les cellules lorsque les cellules (ou le module) sont activées.

Si le courant consommé dans le pack batterie est plus ou moins continu ou basse fréquence, il peut être nécessaire d'utiliser des captateurs de courant qui passent le continu pour le mesurer (capteurs qui mesurent le champ magnétique à proximité du passage du courant, capteur à effet hall ou utilisation de résistances de shunt). Ces capteurs ont la particularité d'être relativement couteux et gourmand en énergie. Pour s'affranchir de cette limitation, il est possible grâce à l'architecture retenue, d'artificiellement augmenter la fréquence du courant consommé dans les cellules par rapport au courant circulant dans la charge. En effet, on peut alterner les cellules utilisées au niveau des modules et on peut alterner les modules utilisés pour générer la tension de sortie. On peut aussi faire une connexion/déconnexion rapide d'une cellule juste au moment ou l'on veut mesurer son courant. Ce hachage de courant au niveau des cellules ou modules permet de plus facilement mesurer le courant puisque la fréquence de ce dernier est augmentée. On peut par exemple utiliser un simple transformateur de courant qui peut être intégré directement sur une carte PCB qui sert de support à l'électronique de mesure. En déconnectant la cellule, on annule le courant qui traverse la cellule et on dé-sature le matériau magnétique du transformateur de courant (saturation liés par exemple à la circulation d'un courant continu ou très basse fréquence). Lorsque l'on reconnecte la cellule, le transformateur de courant se comporte comme un vrai transformateur de courant jusqu'à ce que le matériau soit à nouveau saturé. Avant cette saturation, on en profite pour faire la mesure de courant au secondaire du transformateur. Finalement, on déconnecte temporairement la cellule à chaque fois que l'on veut faire une mesure de courant.

Une seconde fonction est une mesure de courant. On peut par ailleurs déconnecter temporairement la cellule (plus éventuellement éviter que le courant ne passe par une diode inverse) pour calibrer d'autres types de capteur de courant : on sait que lorsque la cellule est déconnectée, le courant qui la traverse est nul, ce qui permet de calibrer le zéro du capteur. On peut aussi calibrer d'autres points de la caractéristique du capteur si on fait circuler dans le pack batterie un courant calibré connu (par exemple au moment de la recharge du pack), ou que l'on mesure le courant avec un capteur de courant calibré et précis au niveau du pack batterie. Ensuite, en aiguillant le courant d'une cellule à l'autre au niveau de chaque étage en connectant une à une les cellules, on peut calibrer le capteur de courant de chaque cellule vis-à-vis de ce point de courant et faire de même pour d'autres points de courant. Au final, si on extrapole un peu plus le concept, avec un seul capteur de courant calibré, stable et précis placé dans le pack batterie (au niveau d'une cellule ou du pack), on peut, avec le jeu d'interrupteurs, calibrer tous les autres capteurs de courant du pack batterie. Cette possibilité de calibration en temps réel des capteurs de courant, notamment durant le fonctionnement du pack batteries, permet d'utiliser des capteurs très bas coût (puisqu'ils n'ont pas besoin d'être très stables sur le long terme).

Une troisième fonction consiste en une calibration de la mesure de l'état de charge ou de l'état de santé de la batterie. Pour calculer l'état de charge d'une cellule, la solution la plus courante est de mesurer la tension aux bornes de la cellule. Pour les batteries élémentaires dont la partie active repose sur un principe chimique avancé, de type Lithium-ion Fer Phosphate, la mesure de la tension n'est pas très précise car cette dernière dépend plutôt de la température que de l'état de charge, surtout lorsque l'on est loin de la fin de charge ou de décharge. Pour avoir une mesure plus précise de l'état de charge, il est connu que l'on peut intégrer le courant qui traverse la cellule. En partant d'un état déchargé et que l'on intègre le courant (nombre d'ampères-heures accumulés) et que l'on connait la capacité de la cellule (nombre d'ampères-heure que la batterie élémentaire peut stocker) alors on peut en déduire, en faisant le rapport des deux valeurs, le taux de charge de la cellule. Cette solution est plutôt fiable, mais elle demande des calibrations régulières, car le calcul d'intégration du courant a tendance à dériver au court du temps en raison d'imprécisions sur la mesure du courant, des courants de fuite qui ne sont pas pris en compte, et en raison du fait qu'en vieillissant la cellule perd de sa capacité (le nombre d'ampères-heure stockable diminue). Il est donc nécessaire de faire des calibrations. Pour cela, une solution actuelle consiste à charger et/ou décharger complètement le pack batterie au bout d'un certain nombre de cycles ou d'un certain temps d'utilisation. Une décharge complète suivie d'une recharge complète permet par exemple de mettre à jour la capacité de stockage de la cellule (nombre d'ampères-heure). Cette opération prend un temps assez important, une durée de deux à trois fois plus importante que la durée d'une simple situation de recharge normale de batterie. De plus, cette opération consomme de l'énergie en partie perdue (durant la décharge complète).

Pour s'affranchir de ces inconvénient, l'architecture de batterie selon la solution permet de réaliser ces opérations, non pas sur le pack batterie complet, mais simplement sur une partie des cellules du pack batterie, sur au moins une cellule, afin de pouvoir continuer à utiliser le pack batterie pendant ces phases de calibration, avec une capacité totale disponible réduite de seulement quelques pourcents. La calibration consiste alors à décharger et charger complètement une ou quelques cellules de la batterie, et à remettre à jour la capacité de la cellule ainsi que son compteur d'ampères-heure. A partir de cette analyse sur quelques cellules, il est possible d'en déduire en partie par extrapolation l'état du pack batterie complet. Pour ne pas déséquilibrer le nombre de cycles de charges/décharges effectuées par chacune des cellules, il suffit de changer de cellules de calibration à chaque calibration : on échantillonne à chaque calibration une série de cellules différente.

Une quatrième fonction consiste en une amélioration du fonctionnement d'une cellule. Certaines cellules contiennent une partie active chimique qui vieillit moins vite lorsque leur courant de charge ou de décharge est haché. En effet, pour une même puissance dissipée dans la cellule, il est possible d'atteindre des courants « crêtes » plus élevés si le courant n'est appliqué qu'une certaine proportion du temps, de manière hachée, puisque les pertes sont réduites. Ce courant crête plus élevé se traduit aussi dans la cellule par une tension crête un peu plus élevée que la tension normale de la cellule et celle-ci a tendance à faire déplacer les ions dans la cellule avec plus d'énergie, ce qui à tendance à favoriser leur migration d'une électrode à l'autre et dans une certaine limite à améliorer leur insertion dans l'électrode d'accueille. Ce principe permet à la cellule de limiter sa perte de capacité de stockage d'un cycle de charge/décharge à l'autre et donc de ralentir son vieillissement. Dans le cadre de l'architecture choisie, il est facile d'hacher le courant dans les cellules de la batterie, en alternant le passage du courant global utile d'une cellule à l'autre, par exemple, en connectant les cellules avec un certain rapport cyclique (avec un déphasage dans les connexions/déconnexions des différentes cellules d'un étage) ou en alternant l'activation de modules, en activant les interrupteurs concernés, tout en assurant le bon niveau de tension sur la sortie.

En remarque, tout ou partie des cellules d'une batterie telle que décrite précédemment peut être associée à une source locale d'énergie, par exemple de type capteur solaire, pile à hydrogène, capteur thermique, convertisseur mécanique/électrique, etc., pour profiter de cette source pour son rechargement par exemple, et/ou pour apporter des possibilités supplémentaires pour la fourniture d'énergie par la batterie.

## Revendications

1. Batterie de stockage comprenant plusieurs cellules de stockage disposées dans plusieurs modules (112) reliés entre eux en série, **caractérisée en ce qu'**un module comprend au moins une brique (120) comprenant une borne inférieure et une borne supérieure, entre lesquelles sont agencées deux cellules (111) de stockage et au moins trois interrupteurs (113), les interrupteurs (113) étant reliés aux cellules (111) de stockage de sorte à pouvoir disposer les deux cellules (111) de stockage en série ou en parallèle entre les deux bornes et **en ce que** la batterie comprend un circuit de commande (127) des interrupteurs (113) de ladite au moins une brique.

2. Batterie selon la revendication précédente, **caractérisée en ce que** la au moins une brique (120) comprend une première branche s'étendant entre ses bornes inférieure et supérieure et comprenant dans l'ordre une cellule (111) de stockage et un interrupteur (K1), une seconde branche parallèle à la première entre ses bornes inférieure et supérieure comprenant dans l'ordre un interrupteur (K3) et une cellule (111) de stockage, et une branche intermédiaire comprenant un interrupteur (K5) et reliant respectivement les bornes intermédiaires disposées entre la cellule de stockage et l'interrupteur de chacune des deux branches parallèles.

3. Batterie selon la revendication précédente, **caractérisée en ce que** la au moins une brique (120) comprend deux interrupteurs (K2, K4) supplémentaires disposés respectivement sur chaque branche parallèle du côté de la cellule (111) de stockage.

4. Batterie selon l'une des revendications 1 à 3, **caractérisée en ce qu'**elle comprend un module comprenant une borne inférieure (117) et une borne supérieure (118), entre lesquelles sont disposées deux briques (120, 120'), reliées par trois branches et trois interrupteurs (K7, K8, K9) disposés respectivement entre les deux bornes inférieures des deux briques, entre leurs deux bornes supérieures, et entre la borne supérieure de la première brique inférieure (120) et la borne inférieure de la seconde brique supérieure (120'), de sorte à pouvoir disposer les deux briques (120, 120') en série ou en parallèle.

5. Batterie selon la revendication précédente, **caractérisée en ce qu'**elle comprend un module comprenant une borne inférieure (117) et une borne supérieure (118), entre lesquelles sont disposés plusieurs ensembles de plus de deux briques (120) pouvant être disposées en série ou en parallèle, ces ensembles pouvant être disposés en série et/ou en parallèle entre les deux bornes inférieure (117) et supérieure (118) du module à l'aide de plusieurs interrupteurs.

6. Batterie selon l'une des revendications 1 à 3, **caractérisée en ce qu'**elle comprend un module comprenant une borne inférieure (117) et une borne supérieure (118), entre lesquelles sont disposées quatre briques pour former une superbrique (156), cette superbrique (156) comprenant un premier ensemble comprenant une première brique reliée à la borne inférieure (117) du module, et reliée à une seconde brique reliée à la borne supérieure (118) du module par l'intermédiaire de trois interrupteurs permettant de disposer ces deux briques en série ou en parallèle, et comprenant un second ensemble de deux autres briques disposées entre les deux bornes inférieure (117) et supérieure (118) du module en parallèle du premier ensemble des deux briques.

7. Batterie selon la revendication précédente, **caractérisée en ce qu'**elle comprend au moins une liaison électrique intermédiaire distincte des bornes supérieure (118) et inférieure (117) entre les deux ensembles de deux briques.

8. Batterie selon l'une des revendications précédentes, **caractérisée en ce que** chaque module comprend une borne inférieure (117) et une borne supérieure (118) entre lesquelles sont disposées plusieurs briques (120) en parallèle, et/ou plusieurs ensembles de deux briques liées entre elles en parallèle, et/ou plusieurs superbriques (156) en parallèle.

9. Batterie selon l'une des revendications précédentes, **caractérisée en ce qu'**elle comprend au moins un module qui comprend plusieurs interrupteurs pour pouvoir annuler la tension de sortie du module et/ou pour former un dispositif d'inversion de la tension de sortie du module (fonction de type pont en H).

10. Batterie selon la revendication précédente, **caractérisée en ce que** tous les modules comprennent un dispositif de type pont en H d'inversion de leur tension de sortie, pour inverser, annuler la tension de sortie ou shunter un ou plusieurs module(s).

11. Batterie selon l'une des revendications précédentes, **caractérisée en ce qu'**elle comprend un circuit de commande (127) d'au moins un interrupteur (K1 à K13) alimenté électriquement directement par au moins une cellule (111) de stockage d'un module de la batterie.

12. Batterie selon l'une des revendications précédentes, **caractérisée en ce qu'**elle comprend au moins un interrupteur (114 ; 214 ; 314 ; 414 ; 514 ; 614; 714) apte à shunter un ou plusieurs modules successifs de la batterie.

13. Batterie selon la revendication précédente, **caractérisée en ce que** le circuit de commande (127) pilote au moins un transistor utilisé pour former un interrupteur de cellule (113), et/ou au moins un transistor utilisé pour former un interrupteur de module (114) et/ou au moins un transistor pour former un dispositif d'inversion série/parallèle entre deux briques d'un module (K7, K8, K9), et/ou au moins un transistor pour former un dispositif d'inversion ou d'annulation de la tension de sortie du module (fonction de type pont en H) (K10 à K13), et/ou au moins un transistor pour shunter plusieurs modules adjacents.

14. Batterie selon l'une des revendications précédentes, **caractérisée en ce qu'**elle comprend une carte électronique (20) disposée entre chaque module de la batterie ou une unique carte électronique sur laquelle sont disposées tous les modules de la batterie ou plusieurs cartes électroniques associées chacune à un ou plusieurs module(s).

15. Batterie selon l'une des revendications précédentes, **caractérisée en ce qu'**elle comprend au moins un capteur de mesure (29) d'une grandeur caractéristique de l'état des cellules de stockage d'un module et **en ce que** le circuit de commande (127) des interrupteurs du module les commande en fonction de la grandeur caractéristique de l'état de ses cellules (111) de stockage et en fonction de la demande d'une charge alimentée par la batterie.

16. Batterie selon la revendication précédente, **caractérisée en ce qu'**elle comprend un capteur de mesure du courant au niveau d'une cellule de stockage, et/ou un capteur de mesure de la tension aux bornes d'une cellule de stockage et/ou aux bornes de son interrupteur de cellule de stockage, et/ou un capteur de mesure de la température d'une cellule de stockage et/ou de mesure de spectrométrie d'impédance.

17. Batterie selon l'une des revendications précédentes, **caractérisée en ce qu'**elle comprend au moins un circuit de traitement (130) au niveau d'un module et/ou un calculateur central (122), qui pilote(nt) les interrupteurs d'un module par l'intermédiaire du circuit de commande (127).

18. Batterie selon la revendication précédente, **caractérisée en ce qu'**elle comprend un calculateur central (122) et un bus de communication (121) reliant les différents modules au calculateur central par l'intermédiaire d'une isolation galvanique.

19. Batterie selon l'une des revendications précédentes, **caractérisée en ce que** les interrupteurs de la au moins une brique sont des transistors.

20. Batterie selon l'une des revendications précédentes, **caractérisée en ce qu'**elle comprend plusieurs parties de plusieurs modules comprenant des cellules de stockage de technologie électrochimique différente.

21. Procédé de gestion d'une batterie selon l'une des revendications précédentes, **caractérisé en ce qu'**il comprend une étape de détermination de la position des interrupteurs d'une brique de la batterie pour disposer ses deux cellules de stockage en série ou en parallèle.

22. Procédé de gestion d'une batterie de stockage selon la revendication précédente, **caractérisé en ce qu'**il comprend les actionnements suivants des interrupteurs d'une brique de la batterie :
- fermeture des interrupteurs disposés sur une première branche disposée entre les bornes inférieure et supérieure d'une brique de la batterie, et ouverture d'un interrupteur disposé sur une branche intermédiaire reliant respectivement les bornes intermédiaires disposées entre la cellule de stockage et un interrupteur de deux branches parallèles, pour disposer les deux cellules de stockage de la brique en parallèle, ou
- ouverture des interrupteurs disposés sur une première branche entre les bornes inférieure et supérieure d'une brique de la batterie, et fermeture d'un interrupteur disposé sur une branche intermédiaire reliant respectivement les bornes intermédiaires disposées entre la cellule de stockage et un interrupteur de deux branches parallèles, pour disposer les deux cellules de stockage de la brique en série.

23. Procédé de gestion d'une batterie selon la revendication 21 ou 22, **caractérisé en ce qu'**il comprend la mise en parallèle des deux cellules de stockage d'une brique lorsque le courant demandé en sortie de la batterie dépasse un certain seuil, et une mise en série des deux cellules de stockage de la brique lorsque la tension demandée en sortie de la batterie dépasse un certain seuil.

24. Procédé de gestion d'une batterie selon l'une des revendications 21 à 23, **caractérisé en ce qu'**il comprend les actionnements suivants des interrupteurs d'une brique de la batterie :
- fermeture des interrupteurs disposés sur une première branche entre les bornes inférieure et supérieure d'une brique de la batterie et d'un interrupteur positionné sur la branche intermédiaire et ouvertures d'interrupteurs supplémentaires disposés respectivement sur chaque branche parallèle du côté de la cellule de stockage, pour obtenir une différence de tension nulle entre les bornes supérieure et inférieure de la brique,
- fermeture des interrupteurs disposés sur une première branche entre les bornes inférieure et supérieure d'une brique et ouverture d'au moins un autre interrupteur pour déconnecter la cellule de stockage de la seconde branche parallèle de la brique et obtenir le fonctionnement de la brique avec uniquement la cellule de stockage de la première branche.

25. Procédé de gestion d'une batterie selon l'une des revendications 21 à 24, **caractérisé en ce qu'**il comprend une étape d'alimentation électrique d'un circuit de commande d'un interrupteur d'une brique de la batterie à partir d'au moins une cellule de stockage de la batterie.

26. Procédé de gestion d'une batterie selon l'une des revendications 21 à 25, **caractérisé en ce qu'**il comprend les étapes suivantes :
- mesure d'au moins une grandeur au niveau d'une cellule de stockage de la batterie, représentative de l'état de la cellule de stockage ;
- transmission de ladite grandeur mesurée à au moins un circuit de traitement ou un calculateur ;
- détermination de la position d'un interrupteur d'une brique en prenant en compte ladite grandeur mesurée ;
- commande de l'ouverture ou fermeture d'au moins un interrupteur de la brique comprenant ladite cellule de stockage.

27. Procédé de gestion d'une batterie selon la revendication précédente, **caractérisé en ce qu'**il comprend une étape consistant à comparer une grandeur mesurée à un seuil pour diagnostiquer l'état de la cellule de stockage, estimer la charge de la cellule de stockage et/ou son état de santé.

28. Procédé de gestion d'une batterie selon l'une des revendications 21 à 27, **caractérisé en ce qu'**il comprend tout ou partie des étapes suivantes :
- équilibrage des modules et/ou cellules de stockage entre eux/elles, en utilisant en priorité les modules et/ou cellules de stockage les plus chargé(e)s lorsque la batterie est connectée à une charge et les modules et/ou les cellules de stockage les moins chargé(e)s lors de la recharge de la batterie ;
- équilibrage des modules et/ou cellules de stockage en modifiant un taux moyen d'utilisation des modules et/ou cellules de stockage, mais sans utiliser les mêmes modules et/ou cellules de stockage en permanence, de sorte que la charge des modules et/ou cellules de stockage s'équilibre ;
- choix d'utilisation des modules en fonction du courant qu'ils peuvent fournir ;
- limitation de l'utilisation des modules et/ou cellules de stockage dont la température est la plus élevée ou utilisation de manière préférentielle lorsque le courant demandé est plus faible ;
- maintien homogène de la température au sein de la batterie.

29. Procédé de gestion d'une batterie selon l'une des revendications 21 à 28, **caractérisé en ce qu'**il comprend une étape d'ouverture/fermeture cyclique d'au moins un interrupteur d'une brique de la batterie de sorte de déconnecter/connecter une cellule de stockage de la brique, le rapport cyclique étant fixé en fonction du temps total d'utilisation de ladite cellule de stockage, lui-même déterminé en fonction du besoin global en courant et tension de la batterie et en fonction du diagnostic de la cellule de stockage considérée.

30. Procédé de gestion d'une batterie selon l'une des revendications 21 à 29, **caractérisé en ce qu'**il comprend une étape de communication par courant porteur entre un circuit de traitement d'une brique et celui d'une autre brique ou un calculateur central ou une charge.

31. Procédé de gestion d'une batterie selon l'une des revendications 21 à 30, **caractérisé en ce qu'**il comprend une étape de régulation de la tension de sortie de la batterie qui comprend une étape d'ouverture/fermeture d'interrupteurs de briques de la batterie pour suivre une consigne de tension de sortie imposée.

32. Procédé de gestion d'une batterie selon l'une des revendications 21 à 31, **caractérisé en ce qu'**il comprend une étape de déconnexion de toutes les cellules de stockage de la batterie en cas d'arrêt prolongé de la batterie ou d'incident.

33. Procédé de gestion d'une batterie selon l'une des revendications 21 à 32, **caractérisé en ce qu'**il comprend une étape de diagnostic du fonctionnement de tout ou partie des interrupteurs.

34. Procédé de gestion d'une batterie selon l'une des revendications 21 à 33, **caractérisé en ce qu'**il comprend une étape d'estimation de l'état de santé SOH d'une cellule de stockage comprenant un cycle de charge et décharge de ladite cellule de stockage, pendant le fonctionnement normal du reste de la batterie.

35. Procédé de gestion d'une batterie selon l'une des revendications 21 à 34, **caractérisé en ce qu'**il comprend une étape d'estimation de l'impédance électrique complexe d'une cellule de stockage en observant sa réponse en courant et/ou tension à sa connexion et/ou déconnexion soit forcée, soit du lors du fonctionnement normal de la batterie.

## Patentansprüche

1. Speicherbatterie, welche mehrere Speicherzellen umfasst, die in mehreren Modulen (112) angeordnet sind, die seriell miteinander verbunden sind, **dadurch gekennzeichnet, dass** ein Modul mindestens einen Baustein (120) umfasst, der eine untere Anschlussklemme und eine obere Anschlussklemme umfasst, zwischen denen zwei Speicherzellen (111) und mindestens drei Schalter (113) angeordnet sind, wobei die Schalter (113) mit den Speicherzellen (111) derart verbunden sind, dass sie die zwei Speicherzellen (111) in Reihe oder parallel zwischen den zwei Anschlussklemmen anordnen können, und dadurch, dass die Batterie eine Steuerschaltung (127) für die Schalter (113) des mindestens einen Bausteins umfasst.

2. Batterie nach dem vorhergehenden Anspruch, **dadurch gekennzeichnet, dass** der wenigstens eine Baustein (120) einen ersten Zweig, der sich zwischen seiner unteren und seiner oberen Anschlussklemme erstreckt und der Reihe nach eine Speicherzelle (111) und einen Schalter (K1) umfasst, einen zweiten Zweig, der zu dem ersten parallel ist, zwischen seiner unteren und seiner oberen Anschlussklemme, welcher der Reihe nach einen Schalter (K3) und eine Speicherzelle (111) umfasst, und einen Zwischenzweig, der einen Schalter (K5) umfasst und die jeweiligen Zwischenanschlussklemmen verbindet, die zwischen der Speicherzelle und dem Schalter jedes der zwei parallelen Zweige angeordnet sind, umfasst.

3. Batterie nach dem vorhergehenden Anspruch, **dadurch gekennzeichnet, dass** der wenigstens eine Baustein (120) zwei zusätzliche Schalter (K2, K4) umfasst, die jeweils in einem der parallelen Zweige auf der Seite der Speicherzelle (111) angeordnet sind.

4. Batterie nach einem der Ansprüche 1 bis 3, **dadurch gekennzeichnet, dass** sie ein Modul umfasst, das eine untere Anschlussklemme (117) und eine obere Anschlussklemme (118) umfasst, zwischen denen zwei Bausteine (120, 120') angeordnet sind, die durch drei Zweige und drei Schalter (K7, K8, K9) verbunden sind, die zwischen den zwei unteren Anschlussklemmen der zwei Bausteine, zwischen deren zwei oberen Anschlussklemmen bzw. zwischen der oberen Anschlussklemme des ersten, unteren Bausteins (120) und der unteren Anschlussklemme des zweiten, oberen Bausteins (120') angeordnet sind, derart, dass sie die zwei Bausteine (120, 120') in Reihe oder parallel anordnen können.

5. Batterie nach dem vorhergehenden Anspruch, **dadurch gekennzeichnet, dass** sie ein Modul umfasst, das eine untere Anschlussklemme (117) und eine obere Anschlussklemme (118) umfasst, zwischen denen mehrere Anordnungen von mehr als zwei Bausteinen (120) angeordnet sind, die in Reihe oder parallel angeordnet werden können, wobei diese Anordnungen mithilfe mehrerer Schalter in Reihe und/oder parallel zwischen den zwei Anschlussklemmen, der unteren (117) und der oberen (118), des Moduls angeordnet werden können.

6. Batterie nach einem der Ansprüche 1 bis 3, **dadurch gekennzeichnet, dass** sie ein Modul umfasst, das eine untere Anschlussklemme (117) und eine obere Anschlussklemme (118) umfasst, zwischen denen vier Bausteine angeordnet sind, um einen Superbaustein (156) zu bilden, wobei dieser Superbaustein (156) eine erste Anordnung umfasst, die einen ersten Baustein umfasst, der mit der unteren Anschlussklemme (117) des Moduls verbunden ist und mit einem zweiten Baustein verbunden ist, der mit der oberen Anschlussklemme (118) des Moduls über drei Schalter verbunden ist, die es ermöglichen, diese zwei Bausteine in Reihe oder parallel anzuordnen, und eine zweite Anordnung von zwei weiteren Bausteinen umfasst, die zwischen den zwei Anschlussklemmen, der unteren (117) und der oberen (118), des Moduls parallel zu der ersten Anordnung der zwei Bausteine angeordnet sind.

7. Batterie nach dem vorhergehenden Anspruch, **dadurch gekennzeichnet, dass** sie mindestens eine von der oberen (118) und unteren (117) Anschlussklemme verschiedene elektrische Zwischenverbindung zwischen den zwei Anordnungen von zwei Bausteinen umfasst.

8. Batterie nach einem der vorhergehenden Ansprüche, **dadurch gekennzeichnet, dass** jedes Modul eine untere Anschlussklemme (117) und eine obere Anschlussklemme (118) umfasst, zwischen denen mehrere Bausteine (120) parallel und/oder mehrere Anordnungen von zwei miteinander verbundenen Bausteinen parallel und/oder mehrere Superbausteine (156) parallel angeordnet sind.

9. Batterie nach einem der vorhergehenden Ansprüche, **dadurch gekennzeichnet, dass** sie mindestens ein Modul umfasst, welches mehrere Schalter umfasst, um die Ausgangsspannung des Moduls auf null reduzieren zu können und/oder um eine Vorrichtung zur Inversion der Ausgangsspannung des Moduls zu bilden (Funktion vom Typ einer H-Brücke).

10. Batterie nach dem vorhergehenden Anspruch, **dadurch gekennzeichnet, dass** alle Module eine Vorrichtung vom Typ einer H-Brücke zur Inversion ihrer Ausgangsspannung umfassen, um die Ausgangsspannung zu invertieren, auf null zu reduzieren oder ein oder mehrere Modul(e) zu überbrücken.

11. Batterie nach einem der vorhergehenden Ansprüche, **dadurch gekennzeichnet, dass** sie eine Steuerschaltung (127) für mindestens einen Schalter (K1 bis K13) umfasst, die von mindestens einer Speicherzelle (111) eines Moduls der Batterie direkt mit Strom versorgt wird.

12. Batterie nach einem der vorhergehenden Ansprüche, **dadurch gekennzeichnet, dass** sie mindestens einen Schalter (114; 214; 314; 414; 514; 614; 714) umfasst, der geeignet ist, ein oder mehrere aufeinander folgende Module der Batterie zu überbrücken.

13. Batterie nach dem vorhergehenden Anspruch, **dadurch gekennzeichnet, dass** die Steuerschaltung (127) mindestens einen Transistor, der verwendet wird, um einen Zellenschalter (113) zu bilden, und/oder mindestens einen Transistor, der verwendet wird, um einen Modulschalter (114) zu bilden, und/oder mindestens einen Transistor, um eine Vorrichtung zur Reihen-Parallel-Umschaltung zwischen zwei Bausteinen eines Moduls zu bilden (K7, K8, K9), und/oder mindestens einen Transistor, um eine Vorrichtung zur Inversion oder Reduzierung auf null der Ausgangsspannung des Moduls zu bilden (Funktion vom Typ einer H-Brücke) (K10 bis K13), und/oder mindestens einen Transistor, um mehrere benachbarte Module zu überbrücken, ansteuert.

14. Batterie nach einem der vorhergehenden Ansprüche, **dadurch gekennzeichnet, dass** sie eine elektronische Karte (20), die zwischen jedem Modul der Batterie angeordnet ist, oder eine einzige elektronische Karte, auf der alle Module der Batterie angeordnet sind, oder mehrere elektronische Karten, die jeweils einem oder mehreren Modul(en) zugeordnet sind, umfasst.

15. Batterie nach einem der vorhergehenden Ansprüche, **dadurch gekennzeichnet, dass** sie mindestens einen Sensor zur Messung (29) einer charakteristischen Größe des Zustands der Speicherzellen eines Moduls umfasst, und dadurch, dass die Steuerschaltung (127) der Schalter des Moduls diese in Abhängigkeit von der charakteristischen Größe des Zustands seiner Speicherzellen (111) und in Abhängigkeit vom Bedarf einer von der Batterie versorgten Last steuert.

16. Batterie nach dem vorhergehenden Anspruch, **dadurch gekennzeichnet, dass** sie einen Sensor zur Messung des Stroms auf der Ebene einer Speicherzelle und/oder einen Sensor zur Messung der Spannung an den Anschlussklemmen einer Speicherzelle und/oder an den Anschlussklemmen ihres Speicherzellenschalters und/oder einen Sensor zur Messung der Temperatur einer Speicherzelle und/oder zur Messung durch Impedanzspektrometrie umfasst.

17. Batterie nach einem der vorhergehenden Ansprüche, **dadurch gekennzeichnet, dass** sie mindestens eine Verarbeitungsschaltung (130) auf der Ebene eines Moduls und/oder einen Zentralrechner (122), welche(r) die Schalter eines Moduls über die Steuerschaltung (127) steuern (steuert), umfasst.

18. Batterie nach dem vorhergehenden Anspruch, **dadurch gekennzeichnet, dass** sie einen Zentralrechner (122) und einen Kommunikationsbus (121), der die verschiedenen Module mit dem Zentralrechner über eine galvanische Trennung verbindet, umfasst.

19. Batterie nach einem der vorhergehenden Ansprüche, **dadurch gekennzeichnet, dass** die Schalter des mindestens einen Bausteins Transistoren sind.

20. Batterie nach einem der vorhergehenden Ansprüche, **dadurch gekennzeichnet, dass** sie mehrere Teile von mehreren Modulen umfasst, die Speicherzellen mit unterschiedlicher elektrochemischer Technologie umfassen.

21. Verfahren zur Verwaltung einer Batterie nach einem der vorhergehenden Ansprüche, **dadurch gekennzeichnet, dass** es einen Schritt der Bestimmung der Stellung der Schalter eines Bausteins der Batterie zum seriellen oder parallelen Anordnen seiner zwei Speicherzellen umfasst.

22. Verfahren zur Verwaltung einer Speicherbatterie nach dem vorhergehenden Anspruch, **dadurch gekennzeichnet, dass** es die folgenden Betätigungen der Schalter eines Bausteins der Batterie umfasst:
- Schließen der Schalter, die in einem ersten Zweig angeordnet sind, der zwischen der unteren und der oberen Anschlussklemme eines Bausteins der Batterie angeordnet ist, und Öffnen eines Schalters, der in einem Zwischenzweig angeordnet ist, der die jeweiligen Zwischenanschlussklemmen verbindet, die zwischen der Speicherzelle und einem Schalter von zwei parallelen Zweigen angeordnet sind, um die zwei Speicherzellen des Bausteins parallel anzuordnen, oder
- Öffnen der Schalter, die in einem ersten Zweig zwischen der unteren und der oberen Anschlussklemme eines Bausteins der Batterie angeordnet sind, und Schließen eines Schalters, der in einem Zwischenzweig angeordnet ist, der die jeweiligen Zwischenanschlussklemmen verbindet, die zwischen der Speicherzelle und einem Schalter von zwei parallelen Zweigen angeordnet sind, um die zwei Speicherzellen des Bausteins in Reihe anzuordnen.

23. Verfahren zur Verwaltung einer Batterie nach Anspruch 21 oder 22, **dadurch gekennzeichnet, dass** es das Parallelschalten der zwei Speicherzellen eines Bausteins, wenn der am Ausgang der Batterie angeforderte Strom einen gewissen Schwellenwert überschreitet, und ein Schalten der zwei Speicherzellen des Bausteins in Reihe, wenn die am Ausgang der Batterie angeforderte Spannung einen gewissen Schwellenwert überschreitet, umfasst.

24. Verfahren zur Verwaltung einer Batterie nach einem der Ansprüche 21 bis 23, **dadurch gekennzeichnet, dass** es die folgenden Betätigungen der Schalter eines Bausteins der Batterie umfasst:
- Schließen der Schalter, die in einem ersten Zweig zwischen der unteren und der oberen Anschlussklemme eines Bausteins der Batterie angeordnet sind, und eines Schalters, der in dem Zwischenzweig positioniert ist, und Öffnen von zusätzlichen Schaltern, die jeweils in einem der parallelen Zweige auf der Seite der Speicherzelle angeordnet sind, um eine Spannungsdifferenz null zwischen der oberen und der unteren Anschlussklemme des Bausteins zu erhalten,
- Schließen der Schalter, die in einem ersten Zweig zwischen der unteren und der oberen Anschlussklemme eines Bausteins angeordnet sind, und Öffnen mindestens eines weiteren Schalters, um die Speicherzelle des parallelen zweiten Zweiges des Bausteins abzuklemmen und den Betrieb des Bausteins mit ausschließlich der Speicherzelle des ersten Zweiges zu erzielen.

25. Verfahren zur Verwaltung einer Batterie nach einem der Ansprüche 21 bis 24, **dadurch gekennzeichnet, dass** es einen Schritt der Stromversorgung einer Steuerschaltung für einen Schalter eines Bausteins der Batterie aus mindestens einer Speicherzelle der Batterie umfasst.

26. Verfahren zur Verwaltung einer Batterie nach einem der Ansprüche 21 bis 25, **dadurch gekennzeichnet, dass** es die folgenden Schritte umfasst:
- Messung mindestens einer Größe auf der Ebene einer Speicherzelle der Batterie, die für den Zustand der Speicherzelle repräsentativ ist;
- Übertragung der gemessenen Größe an mindestens eine Verarbeitungsschaltung oder einen Rechner;
- Bestimmung der Stellung eines Schalters eines Bausteins unter Berücksichtigung der gemessenen Größe;
- Steuerung des Öffnens oder Schließens mindestens eines Schalters des Bausteins, der die Speicherzelle umfasst.

27. Verfahren zur Verwaltung einer Batterie nach dem vorhergehenden Anspruch, **dadurch gekennzeichnet, dass** es einen Schritt umfasst, der darin besteht, eine gemessene Größe mit einem Schwellenwert zu vergleichen, um den Zustand der Speicherzelle zu diagnostizieren, die Ladung der Speicherzelle und/oder ihren Gesundheitszustand zu schätzen.

28. Verfahren zur Verwaltung einer Batterie nach einem der Ansprüche 21 bis 27, **dadurch gekennzeichnet, dass** es alle oder einige der folgenden Schritte umfasst:
- Ausgleichen der Module und/oder Speicherzellen untereinander durch vorrangiges Verwenden der am meisten geladenen Module und/oder Speicherzellen, wenn die Batterie mit einer Last verbunden ist, und der am wenigsten geladenen Module und/oder Speicherzellen beim Aufladen der Batterie;
- Ausgleichen der Module und/oder Speicherzellen durch Ändern eines mittleren Nutzungsgrades der Module und/oder Speicherzellen, jedoch ohne dieselben Module und/oder Speicherzellen ständig zu verwenden, so dass sich die Ladung der Module und/oder Speicherzellen ausgleicht;
- Wählen der Verwendung der Module in Abhängigkeit von dem Strom, den sie liefern können;
- Begrenzen der Verwendung der Module und/oder Speicherzellen, deren Temperatur am höchsten ist, oder bevorzugtes Verwenden, wenn der geforderte Strom schwächer ist;
- homogenes Halten der Temperatur im Inneren der Batterie.

29. Verfahren zur Verwaltung einer Batterie nach einem der Ansprüche 21 bis 28, **dadurch gekennzeichnet, dass** es einen Schritt des zyklischen Öffnens/Schließens mindestens eines Schalters eines Bausteins der Batterie umfasst, um so eine Speicherzelle des Bausteins abzuklemmen/zu verbinden, wobei der Tastgrad in Abhängigkeit von der Gesamtzeit der Verwendung der Speicherzelle festgelegt wird, die ihrerseits in Abhängigkeit von dem Gesamtbedarf an Strom und Spannung der Batterie und in Abhängigkeit von der Diagnose der betreffenden Speicherzelle bestimmt wird.

30. Verfahren zur Verwaltung einer Batterie nach einem der Ansprüche 21 bis 29, **dadurch gekennzeichnet, dass** es einen Schritt der Powerline Communication zwischen einer Verarbeitungsschaltung eines Bausteins und derjenigen eines anderen Bausteins oder einem Zentralrechner oder einer Last umfasst.

31. Verfahren zur Verwaltung einer Batterie nach einem der Ansprüche 21 bis 30, **dadurch gekennzeichnet, dass** es einen Schritt der Regelung der Ausgangsspannung der Batterie umfasst, welcher einen Schritt des Öffnens/Schließens von Schaltern von Bausteinen der Batterie umfasst, um einem vorgegebenen Sollwert der Ausgangsspannung zu folgen.

32. Verfahren zur Verwaltung einer Batterie nach einem der Ansprüche 21 bis 31, **dadurch gekennzeichnet, dass** es einen Schritt des Abklemmens aller Speicherzellen der Batterie im Fall eines längeren Stillstands der Batterie oder einer Störung umfasst.

33. Verfahren zur Verwaltung einer Batterie nach einem der Ansprüche 21 bis 32, **dadurch gekennzeichnet, dass** es einen Schritt der Diagnose der Funktion aller oder eines Teils der Schalter umfasst.

34. Verfahren zur Verwaltung einer Batterie nach einem der Ansprüche 21 bis 33, **dadurch gekennzeichnet, dass** es einen Schritt der Schätzung des Gesundheitszustands SOH einer Speicherzelle umfasst, der einen Zyklus des Ladens und Entladens dieser Speicherzelle während des normalen Betriebs des Restes der Batterie umfasst.

35. Verfahren zur Verwaltung einer Batterie nach einem der Ansprüche 21 bis 34, **dadurch gekennzeichnet, dass** es einen Schritt der Schätzung der komplexen elektrischen Impedanz einer Speicherzelle durch Beobachten ihrer Strom- und/oder Spannungsantwort auf ihre entweder erzwungene oder während des normalen Betriebs der Batterie erfolgende Verbindung und/oder Trennung umfasst.

## Claims

1. Storage battery comprising several storage cells disposed in several modules (112) linked together in series, **characterized in that** a module comprises at least one brick (120) comprising a lower terminal and an upper terminal, between which are arranged two storage cells (111) and at least three switches (113), the switches (113) being connected to the storage cells (111) so as to be able to dispose the two storage cells (111) in series or in parallel between the two terminals and **in that** the battery comprises a control circuit (127) for the switches (113) of the said at least one brick.

2. Battery according to the preceding claim, **characterized in that** the at least one brick (120) comprises a first branch extending between its lower and upper terminals and comprising in this order a storage cell (111) and a switch (K1), a second branch parallel to the first between its lower and upper terminals comprising in this order a switch (K3) and a storage cell (111), and an intermediate branch comprising a switch (K5) and linking respectively the intermediate terminals disposed between the storage cell and the switch of each of the two parallel branches.

3. Battery according to the preceding claim, **characterized in that** the at least one brick (120) comprises two additional switches (K2, K4) disposed respectively on each parallel branch on the side of the storage cell (111).

4. Battery according to one of Claims 1 to 3, **characterized in that** it comprises a module comprising a lower terminal (117) and an upper terminal (118), between which are disposed two bricks (120, 120'), linked by three branches and three switches (K7, K8, K9) disposed respectively between the two lower terminals of the two bricks, between their two upper terminals, and between the upper terminal of the first lower brick (120) and the lower terminal of the second upper brick (120'), so as to be able to dispose the two bricks (120, 120') in series or in parallel.

5. Battery according to the preceding claim, **characterized in that** it comprises a module comprising a lower terminal (117) and an upper terminal (118), between which are disposed several sets of more than two bricks (120) being able to be disposed in series or in parallel, these sets being able to be disposed in series and/or in parallel between the two terminals, lower (117) and upper (118), of the module with the aid of several switches.

6. Battery according to one of Claims 1 to 3, **characterized in that** it comprises a module comprising a lower terminal (117) and an upper terminal (118), between which are disposed four bricks so as to form a superbrick (156), this superbrick (156) comprising a first set comprising a first brick linked to the lower terminal (117) of the module, and linked to a second brick linked to the upper terminal (118) of the module by way of three switches making it possible to dispose these two bricks in series or in parallel, and comprising a second set of two other bricks disposed between the two terminals, lower (117) and upper (118), of the module in parallel with the first set of the two bricks.

7. Battery according to the preceding claim, **characterized in that** it comprises at least one intermediate electrical link distinct from the upper (118) and lower (117) terminals between the two sets of two bricks.

8. Battery according to one of the preceding claims, **characterized in that** each module comprises a lower terminal (117) and an upper terminal (118) between which are disposed several bricks (120) in parallel, and/or several sets of two bricks joined together in parallel, and/or several superbricks (156) in parallel.

9. Battery according to one of the preceding claims, **characterized in that** it comprises at least one module which comprises several switches so as to be able to cancel the output voltage of the module and/or to form a device for inverting the output voltage of the module (function of H-bridge type).

10. Battery according to the preceding claim, **characterized in that** all the modules comprise a device of H-bridge type for inverting their output voltage, to invert, cancel the output voltage or shunt one or more module(s).

11. Battery according to one of the preceding claims, **characterized in that** it comprises a control circuit (127) for at least one switch (K1 to K13) supplied electrically directly by at least one storage cell (111) of a module of the battery.

12. Battery according to one of the preceding claims, **characterized in that** it comprises at least one switch (114; 214; 314; 414; 514; 614; 714) able to shunt one or more successive modules of the battery.

13. Battery according to the preceding claim, **characterized in that** the control circuit (127) drives at least one transistor used to form a cell switch (113), and/or at least one transistor used to form a module switch (114) and/or at least one transistor to form a device for series/parallel inversion between two bricks of a module (K7, K8, K9), and/or at least one transistor to form a device for inverting or cancelling the output voltage of the module (function of H-bridge type) (K10 to K13), and/or at least one transistor to shunt several adjacent modules.

14. Battery according to one of the preceding claims, **characterized in that** it comprises an electronic card (20) disposed between each module of the battery or a single electronic card on which are disposed all the modules of the battery or several electronic cards each associated with one or more module(s).

15. Battery according to one of the preceding claims, **characterized in that** it comprises at least one sensor (29) for measuring a magnitude characteristic of the state of the storage cells of a module and **in that** the control circuit (127) for the switches of the module controls them as a function of the magnitude characteristic of the state of its storage cells (111) and as a function of the demand of a load powered by the battery.

16. Battery according to the preceding claim, **characterized in that** it comprises a sensor for measuring the current at the level of a storage cell, and/or a sensor for measuring the voltage across the terminals of a storage cell and/or across the terminals of its storage cell switch, and/or a sensor for measuring the temperature of a storage cell and/or for impedance spectrometry measurement.

17. Battery according to one of the preceding claims, **characterized in that** it comprises at least one processing circuit (130) at the level of a module and/or a central computer (122), which drives(drive) the switches of a module by way of the control circuit (127).

18. Battery according to the preceding claim, **characterized in that** it comprises a central computer (122) and a communication bus (121) linking the various modules to the central computer by way of a galvanic isolation.

19. Battery according to one of the preceding claims, **characterized in that** the switches of the at least one brick are transistors.

20. Battery according to one of the preceding claims, **characterized in that** it comprises several parts of several modules comprising storage cells of different electrochemical technology.

21. Method for managing a battery according to one of the preceding claims, **characterized in that** it comprises a step of determining the position of the switches of a brick of the battery so as to dispose its two storage cells in series or in parallel.

22. Method for managing a storage battery according to the preceding claim, **characterized in that** it comprises the following actuations of the switches of a brick of the battery:
- closing of the switches disposed on a first branch disposed between the lower and upper terminals of a brick of the battery, and opening of a switch disposed on an intermediate branch linking respectively the intermediate terminals disposed between the storage cell and a switch of two parallel branches, so as to dispose the two storage cells of the brick in parallel, or
- opening of the switches disposed on a first branch between the lower and upper terminals of a brick of the battery, and closing of a switch disposed on an intermediate branch linking respectively the intermediate terminals disposed between the storage cell and a switch of two parallel branches, so as to dispose the two storage cells of the brick in series.

23. Method for managing a battery according to Claim 21 or 22, **characterized in that** it comprises the placing in parallel of the two storage cells of a brick when the current demanded at output of the battery exceeds a certain threshold, and a placing in series of the two storage cells of the brick when the voltage demanded at output of the battery exceeds a certain threshold.

24. Method for managing a battery according to one of Claims 21 to 23, **characterized in that** it comprises the following actuations of the switches of a brick of the battery:
- closing of the switches disposed on a first branch between the lower and upper terminals of a brick of the battery and of a switch positioned on the intermediate branch and openings of additional switches disposed respectively on each parallel branch on the storage cell side, so as to obtain a zero voltage difference between the upper and lower terminals of the brick,
- closing of the switches disposed on a first branch between the lower and upper terminals of a brick and opening of at least one other switch so as to disconnect the storage cell of the second parallel branch of the brick and obtain the operation of the brick with solely the storage cell of the first branch.

25. Method for managing a battery according to one of Claims 21 to 24, **characterized in that** it comprises a step of electrical powering of a control circuit of a switch of a brick of the battery on the basis of at least one cell of the battery.

26. Method for managing a battery according to one of Claims 21 to 25, **characterized in that** it comprises the following steps:
- measurement of at least one magnitude at the level of a storage cell of the battery, representative of the state of the storage cell;
- transmission of the said measured magnitude to at least one processing circuit or a computer;
- determination of the position of a switch of a brick by taking into account the said measured magnitude;
- control of the opening or closing of at least one switch of the brick comprising the said storage cell.

27. Method for managing a battery according to the preceding claim, **characterized in that** it comprises a step consisting in comparing a measured magnitude with a threshold to diagnose the state of the storage cell, estimate the charge of the storage cell and/or its state of health.

28. Method for managing a battery according to one of Claims 21 to 27, **characterized in that** it comprises all or some of the following steps:
- mutual balancing of the modules and/or storage cells, by using by priority the modules and/or storage cells with the most charge when the battery is connected to a load and the modules and/or the storage cells with the least charge during the recharging of the battery;
- balancing of the modules and/or storage cells by modifying the mean rate of use of the modules and/or storage cells, but without using the same modules and/or storage cells permanently, so that the charge of the modules and/or storage cells balances;
- choice of use of the modules as a function of the current that they can provide;
- limitation of the use of the modules and/or storage cells whose temperature is the highest or use in a preferential manner when the current demanded is lower;
- maintaining homogeneous of the temperature within the battery.

29. Method for managing a battery according to one of Claims 21 to 28, **characterized in that** it comprises a step of cyclic opening/closing of at least one switch of a brick of the battery so as to disconnect/connect a storage cell of the brick, the duty ratio being fixed as a function of the total time of use of the said storage cell, itself determined as a function of the global need in terms of current and voltage of the battery and as a function of the diagnosis of the storage cell considered.

30. Method for managing a battery according to one of Claims 21 to 29, **characterized in that** it comprises a step of communication by carrier current between a processing circuit of a brick and that of another brick or a central computer or a load.

31. Method for managing a battery according to one of Claims 21 to 30, **characterized in that** it comprises a step of regulating the output voltage of the battery which comprises a step of opening/closing of switches of bricks of the battery so as to follow an imposed output voltage setpoint.

32. Method for managing a battery according to one of Claims 21 to 31, **characterized in that** it comprises a step of disconnecting all the storage cells of the battery in case of prolonged stoppage of the battery or of incident.

33. Method for managing a battery according to one of Claims 21 to 32, **characterized in that** it comprises a step of diagnosing the operation of all or some of the switches.

34. Method for managing a battery according to one of Claims 21 to 33, **characterized in that** it comprises a step of estimating the state of health SOH of a storage cell comprising a cycle of charging and discharging of the said storage cell, during the normal operation of the remainder of the battery.

35. Method for managing a battery according to one of Claims 21 to 34, **characterized in that** it comprises a step of estimating the complex electrical impedance of a storage cell by observing its response in current and/or voltage to its connection and/or disconnection either forced, or during the normal operation of the battery.
